# EUROPEAN PATENT SPECIFICATION

(11) **EP 2 156 397 B1**
(45) Date of publication and mention of the grant of the patent: **26.06.2019**
(21) Application number: 08755755.9
(22) Date of filing: 16.05.2008
(51) Int. Cl.: G06Q 40/00, G06Q 20/00

(54) **SECURE PAYMENT CARD TRANSACTIONS**
SICHERE BEZAHLUNGSKARTENTRANSAKTIONEN
TRANSACTIONS PAR CARTE DE PAIEMENT SÉCURISÉES

(30) Priority: 17.05.2007 US 750239; 17.05.2007 US 750181; 17.05.2007 US 750184
(43) Date of publication of application: 24.02.2010
(73) Proprietor: Shift4 Corporation, Las Vegas, NV 89144 (US)
(72) Inventor: ODER, John, David, II., Las Vegas, Nevada 89144-7047 (US); ODER, John, David, Las Vegas, Nevada 89144-7047 (US); CRONIC, Kevin, James, Las Vegas, Nevada 89144-7047 (US); SOMMERS, Steven, Mark, Las Vegas, Nevada 89144-7047 (US); WARNER, Dennis, William, Las Vegas, Nevada 89144-7047 (US)
(74) Representative: Fennell, Gareth Charles
(86) International application number: PCT/US2008/063966
(87) International publication number: WO 2008/144555

(56) References cited:
- EP-A2- 1 324 564
- WO-A2-01/29637
- US-A- 6 000 832
- US-A1- 2001 021 925
- US-A1- 2003 126 094
- US-A1- 2005 177 442
- US-A1- 2005 177 521
- US-A1- 2005 204 172
- US-A1- 2006 036 541
- US-A1- 2006 261 159

## Description

### BACKGROUND

### Field

The present disclosure relates to payment systems.

### Description of the Related Art

The use of payment cards such as credit cards, debit cards, and gift cards has become ubiquitous in our current commercial transaction society. Virtually every merchant, as well as other facilities where monetary transactions occur for the purchase of goods or services, accept one or more types of payment cards for these transactions. Once a payment card is presented to a particular merchant at a point of sale to purchase goods or services, the payment card is usually read using a card swipe reader. Alternatively, payment data is entered manually through a pin pad or keyboard or through a combination of card swipe and manual entry.

The payment data is transmitted to an authorizing entity, which may be a card processor, card association, issuing bank, or other entity, along with information relating to purchase price and identification information of the particular merchant. In some instances, the information passes through one or more intermediaries before reaching the authorizing entity. The authorizing entity approves or disapproves the transaction. Once a decision is made at the authorizing entity, a return message is sent to the merchant indicating the disposition of the transaction.

As payment card transactions become more ubiquitous, so do thefts of payment data. Thefts can come from many sources, including employees, malicious software, and hardware devices for intercepting payment data. Perpetrators obtain payment data, including personal account numbers (PANs), personal identification numbers (PINs), expiration dates, and the like, for purposes of committing fraud. In some instances, thieves use the payment data to obtain goods, services, and cash. In other instances, perpetrators sell payment data to others who fraudulently use the cards. These thefts often occur at the point of sale.

EP1324564A2 describes a system and method for securing transactional data communicated over a wireless network in a retail store by obfuscating transactional messages in a traffic flow. The system includes a load balancer coupled to a host and a plurality of terminals connected to the host through a wireless network. The load balancer determines idle periods of time of the communication. If this time is greater than a threshold, a bogus transactional request message is sent to one or more terminals. Accordingly, bogus transactional messages with false customer, account, and transactional data are transmitted by the terminals to the host until a timer expires or a real transaction commences. Real and false transactional messages are also encrypted to increase processing time for the messages by eavesdroppers.

WO0129637A2 describes a system and method for conducting secure electronic transactions. Disclosed is a central server system which can process and correlate proxy numbers or data which is substituted for personal data and financial information during transactions where the information could be intercepted or misused by the recipient. In the preferred mode, transaction numbers are used by customers to conceal their actual credit card number from online merchants and those who would attempt to intercept credit card numbers used in online transactions.

US2005177442A1 describes a method and system for performing retail transactions allows use of a wireless device in lieu of conventional financial cards. A retail system sends customer-independent transaction data, which is matched with a customer account associated with a wireless device. A customer sends a wireless communication from a wireless device to a server. The server identifies the wireless device and identifies a customer account associated with the wireless device. The customer account and the customer-independent transaction data are matched together, authorizing the retail transaction. When multiple retail transactions occur within a short time, a matching technique scores matches between multiple retail transactions and multiple customer-initiated wireless communications.

US2001021925A1 describes an agent device connected to a user device for browsing a merchant site, for selling products online and being served up on the Internet, the merchant site, and a server device of a credit-card company. In the case where an instruction of purchasing a product browsed by the user device is output, the instruction is sent to the agent device. The agent device extracts a credit card number of a credit card held by a user having purchased the product, and inquires of the server device of the credit card company whether the product is to be purchased with the credit card. As an inquiry result, in the case where the product can be purchased online with the credit card, the agent device sends an instruction that the user purchases the product online with the credit card.

US6000832A describes an online commerce system facilitates online commerce over a public network using an online commerce card. The "card" does not exist in physical form, but instead exists in digital form. It is assigned a customer account number that includes digits for a prefix number for bank-handling information, digits for a customer identification number, digits reserved for an embedded code number, and a digit for check sum. The bank also gives the customer a private key. During an online transaction, the customer computer retrieves the private key and customer account number from storage. The customer computer generates a code number as a function of the private key, customer-specific data (e.g. card-holder's name, account number, etc.) and transaction-specific data (e.g. transaction amount, merchant ID, goods ID, time, transaction date, etc.). The customer computer embeds the code number in the reserved digits of the customer account number to create a transaction number specific to the transaction. The customer submits that transaction number to the merchant as a proxy for a regular card number. When the merchant submits the number for approval, the issuing institution recognizes it as a proxy transaction number, indexes the customer account record, and looks up the associated private key and customer-specific data. The institution computes a test code number using the same function and input parameters as the customer computer. The issuing institution compares the test code number with the code number embedded in the transaction number. If the two numbers match, the issuing institution accepts the transaction number as valid.

US2006261159A1 describes systems and methods for monitoring transaction data in a point-of-sale (POS) system. An inline component is connected between a POS terminal and a printer. The inline component monitors communications between the POS terminal and the printer as well as communications sent to or from other devices connected with the POS terminal. As the data in the communications are monitored, portions of the data are extracted and sent to a remote processing server. The remote processing returns information which could comprise a variety of information, such as: fraud deterrent data, store promotions, customer messages, and the like to the inline component. The inline component sends this information to the printer for presentation to the user. The information is typically sent to the printer without interfering with the transaction being performed by the POS terminal. Commands included in the information can be implemented by the inline component.

US2005177521A1 describes a method for obtaining an approval of an electronic fund transfer (EFT) disbursement file from a user of a remote system and transferring the EFT disbursement file to a payments processor. The method comprises generating a digest, by performing a hash of the EFT disbursement file, and transferring the digest to the remote system along with authorization control code. The authorization control code drives the remote system to obtain a digital signature of authenticated attributes, which includes the digest, and generate an authorization response. The method further comprises receiving the authorization response from the remote system and transferring an electronic funds submission to the payments processor. The electronic funds submission comprises the payment transaction file and at least a portion of the authorization response comprising the digital signature.

US2006036541A1 describes a system to process credit card payment transactions initiated by a merchant which includes an interface to receive a merchant-initiated request for a transfer of funds from a buyer credit card account. A credit card processing application initiates the transfer of funds from the buyer credit card account to a third-party merchant bank account, held by a third-party payment service. The third-party merchant bank account receives funds from the buyer credit card account on behalf of the merchant. A funds allocation application allocates the received funds to a receiving account of the merchant, the receiving account being maintained by the third-party payment service. The credit card processing application may be virtual point of sale (POS) terminal application, hosted at a server computer system operated by the third-party payment service, and accordingly may be accessible by the merchant via a network.

US2005204172A1 describes an information management system comprising one or more workstations running applications to allow a user of the workstation to connect to a network, such as the Internet. Each application has an analyser, which monitors transmission data that the application is about to transmit to the network or about to receive from the network and which determines an appropriate action to take regarding that transmission data. Such actions may be extracting data from the transmission data, such as passwords and usernames, digital certificates or eCommerce transaction details for storage in a database; ensuring that the transmission data is transmitted at an encryption strength appropriate to the contents of the transmission data; determining whether a check needs to be made as to whether a digital certificate received in transmission data is in force, and determining whether a transaction about to be made by a user of one of the workstations needs third party approval before it is made. The analyser may consult a policy data containing a policy to govern the workstations in order to make its determination. The information management system provides many advantages in the eCommerce environment to on-line trading companies, who may benefit by being able to regulate the transactions made by their staff according to their instructions in a policy data, automatically maintain records of passwords and business conducted on-line, avoid paying for unnecessary checks on the validity of digital certificates and ensure that transmissions of data made by their staff are always protected at an agreed strength of encryption.

US2003126094A1 describes online methods, systems, and software for improving the processing of payments from financial accounts, particularly credit and debit card payments made from consumers to merchants in online transactions. The preferred embodiment of the invention involves inserting a trusted third party online service into the payment authorization process. The trusted third party authenticates the consumer and authorizes the proposed payment in a single integrated process conducted without the involvement of the merchant. The authentication of the consumer is accomplished over a persistent communication channel established with the consumer before a purchase is made. The authentication is done by verifying that the persistent channel is open when authorization is requested. Use of the third party services allows the consumer to avoid revealing his identity and credit card number to the merchant over a public network such as the Internet, while maintaining control of the transaction during the authorization process.

### SUMMARY

Embodiments of the present invention are defined in the accompanying claims 1-8.

Payment card transactions at a point of sale (POS) may be secured by intercepting, with a POS security layer installed on a POS terminal, payment data from the POS terminal, transmitting the payment data from the POS security layer to a server security application installed on a POS server, and providing false payment data from the POS security layer to a POS terminal application installed on the POS terminal. The false payment data in various embodiments is processed as if it were the payment data, such that the POS terminal transmits an authorization request to the POS server using the false payment data. In addition, the authorization request may be transmitted from the POS server to a payment gateway.

A method is also provided for adding security to a point of sale (POS) terminal which communicates over a network with a POS server, where the POS terminal can include a POS terminal application installed thereon and a payment card reader, where the POS terminal application can communicate with the POS server over a non-secure channel to process payment card transactions. The method can include installing a POS security layer on the POS terminal, where the POS security layer can at least: (a) intercept payment data received from the payment card reader when a user initiates a payment card transaction, where the payment data includes actual card data, (b) pass false card data to the POS terminal application for use in place of the actual card data, such that the false card data is transmitted over the non-secure channel to the POS server in place of the actual card data, and (c) transmit the actual card data to the POS server over a secure channel, such that the actual card data is inhibited from being transmitted over a non-secure channel.

In certain examples, the false card data includes a false payment card number. In certain examples, the false card data is used as if it were the actual card data but does not correspond to a valid payment card account. In certain embodiments, the POS security layer generates at least a portion of the false card data. In certain examples, at least a portion of the false card data is re-used as a token for an additional payment card transaction. In certain examples, the POS security layer displays a substitute payment screen that enables a cardholder to provide at least a portion of the payment data to the POS security layer. In certain examples, the actual card data is obtained from a card swipe. In certain embodiments, the actual card data is manually entered.

A computer-readable medium is also provided having stored thereon a POS security layer that can be installed on a POS terminal that runs a POS terminal application and that communicates with a POS server over a network. The POS security layer can include executable instructions that cause the POS terminal to at least: intercept actual payment data received from a card entry device when a user initiates a payment card transaction, such that the actual payment data is not made available to the POS terminal application, pass false payment data to the POS terminal application for use in place of the actual payment data, such that the POS terminal application transmits the false payment data to the POS server in place of the actual payment data, and transmit the actual payment data to the POS server.

In certain embodiments, the POS security layer obtains at least a portion of the false payment data from a security application that runs on the POS server. In certain embodiments, the false payment data is generated using an algorithm that substantially guarantees that the false payment data does not represent valid card data. In certain examples, the POS security layer intercepts the actual payment data by acting as a keylogger. In certain examples, the POS security layer intercepts the actual payment data by accessing an input buffer on the POS terminal. In certain embodiments, the false payment data includes a portion of the actual payment data. In certain embodiments, the POS security layer encrypts the actual payment data at the POS terminal. In certain embodiments, the POS security layer provides security to a preexisting non-secure POS terminal. In certain examples, the POS security layer is capable of being invoked directly by a user action. In certain examples, the user action includes a hotkey press or manual key card input. In certain embodiments, the POS security layer is capable of being invoked indirectly by entry of the payment data into the POS terminal. In certain examples, the POS security layer is capable of being invoked programmatically. In certain examples, the actual payment data is transmitted to the POS server over a secure channel.

A method of securing payment transactions at a POS includes intercepting payment data on a POS terminal, where the payment data includes actual payment data from a payment medium, and providing false payment data to the POS terminal, the false payment data processed as if it were the actual payment data, such that the POS terminal transmits an authorization request using the false payment data in place of the actual payment data.

A method is provided for providing false payment data for use in place of actual payment data at a POS to inhibit the transmission of actual payment data over a non-secure channel. The method can include capturing payment data on a POS terminal, where the payment data includes actual card data from a payment card, generating false card data that can be processed as if it were the actual card data, where the false card data can be configured such that a Luhn modulus 10 test performed on the false card data determines that the false card data includes an invalid payment card number, and providing the false card data to the POS terminal, such that the POS terminal transmits an authorization request to the POS server using the false card data in place of the actual card data.

A method is provided for adding security to a POS server which communicates over a network with one or more POS terminals, where each POS terminal includes a payment card reader, where the POS server includes a POS server application installed thereon that can communicate with the one or more POS terminals over a non-secure channel to process payment card transactions. The method can include installing a server security application on the POS server, where the server security application can at least: (a) receive payment data from the one or more POS terminals over a secure channel, the payment data includes actual card data obtained from the payment card reader, (b) provide false card data to the POS terminal, the false card data configured to be processed as if it were the actual card data, (c) receive a first authorization request from the POS terminal over the non-secure channel, where the first authorization request can include the false card data instead of the actual card data, and (d) transmit a second authorization request to a remote server, where the second authorization request can include at least the actual card data.

A computer-readable medium can be provided having stored thereon a server security application that can be installed on a POS server that runs a POS server application and that communicates with a POS terminal over a network. The server security application can include executable instructions that cause the POS server to at least: receive payment data from the POS terminal, where the payment data can include actual card data from a payment card, receive a first authorization request from the POS terminal, where the first authorization request includes false card data instead of the actual card data, where the false card data being processed as if it were the actual card data, and transmit a second authorization request, the second authorization request includes at least the actual card data.

A method for securing payment card transactions at a POS includes receiving, at a POS server, payment data from a POS terminal, where the payment data includes actual payment data from a payment medium, and receiving, at the POS server, a first authorization request from the POS terminal, where the first authorization request includes false payment data instead of the actual payment data, where the false payment data can be processed as if it were the actual payment data.

A method for securing payment card transactions at a payment gateway can include receiving, at a payment gateway, an authorization request from a POS server, where the authorization request can include combined payment data and false card data, where the payment data can include actual card data from a payment card, where the false payment data can be processed as if it were the payment data, extracting the payment data from the combined payment data and false payment data, transmitting an authorization request from the payment gateway to an authorizing entity, where the authorization request includes the payment data, receiving a response to the authorization request from the authorizing entity, and transmitting the response and the false payment data to the POS server, where the false payment data can uniquely identify the at least one payment card.

A method is provided for adding security to a POS system that includes a POS terminal which communicates over a network with a POS server, where the POS terminal includes a payment card reader and has a POS terminal application installed thereon, where the POS server has a POS server application installed thereon which communicates with the POS terminal application over a non-secure channel to process payment card transactions. The method can include installing a POS security layer on the POS terminal, where the POS security layer can at least (a) intercept actual card data received from the payment card reader when a user initiates a payment card transaction, (b) pass false card data to the POS terminal application for use in place of the actual card data, such that the false card data is transmitted over the non-secure channel to the POS server in place of the actual card data, and (c) transmit the actual card data to the POS server over a secure channel. The method can further include installing a server security application on the POS server, where the server security application can receive the actual card data from the POS security layer over the secure channel and use the false card data to process the payment card transaction.

A method for securing payment card transactions at a POS can include intercepting, with a POS security layer installed on a POS terminal, payment data from the POS terminal, where the payment data includes actual card data from a payment card, transmitting the payment data from the POS security layer to a server security application installed on a POS server, providing false payment data from the POS security layer to a POS terminal application installed on the POS terminal, where the false payment data can be processed as if it were the payment data, such that the POS terminal can transmit a first authorization request to the POS server using the false payment data, and transmitting a second authorization request from the POS server to a remote server, where the second authorization request can include at least the payment data.

A method for securing payment card transactions at a POS can include intercepting payment data from a POS terminal, where the payment data can include actual card data from a payment card, transmitting the actual card data from the POS terminal to a gateway security application installed on a gateway server, receiving, at the POS terminal, false card data, the false card data configured to be processed in place of the actual card data, and providing the false card data to the POS terminal, such that the POS terminal can transmit an authorization request that includes the false card data.

A payment card processing system for securing payment card transactions at a POS can include a POS terminal that can include a host computer and a card entry device, where the host computer can have a POS terminal application installed thereon, a POS server in communication with the POS terminal over a network, where the POS server can have a POS server application installed thereon that communicates with the POS terminal application to process payment card transactions, a POS security layer installed on the host computer of the POS terminal, where the POS security layer can at least (a) intercept actual card data received from the card entry device when a user initiates a payment card transaction, (b) pass false card data to the POS terminal application for use in place of the actual card data, such that the false card data is transmitted to the POS server in place of the actual card data, and (c) transmit the actual card data to the POS server, and a server security application installed on the POS server, where the server security application can be in communication with the POS security layer over the secure channel, where the server security application can receive the actual card data from the POS security layer over the secure channel and use the false card data to process the payment card transaction.

Neither this summary nor the following detailed description purports to define the invention. The invention is defined by claims 1-8.

### BRIEF DESCRIPTION OF THE DRAWINGS

FIG. 1 is an exemplary block diagram illustrating a prior art point-of-sale system;
FIG. 2 is an exemplary block diagram illustrating an embodiment of a point-of-sale system;
FIG. 3 is an exemplary process-flow diagram illustrating an embodiment of a payment card authorization process;
FIG. 4 is an exemplary process-flow diagram illustrating another example of a payment card authorization process;
FIG. 5 is an exemplary flowchart diagram illustrating an example of a process for invoking a security component;
FIG. 6 is an exemplary flowchart diagram illustrating another example of a process for invoking a security component;
FIG. 7 is an exemplary flowchart diagram illustrating an embodiment of a process for encrypting payment data;
FIG. 8 is an exemplary block diagram illustrating certain embodiments of payment data; and
FIG. 9 is an exemplary flowchart diagram illustrating an embodiment of a process for performing incremental authorizations or settlements.

### DETAILED DESCRIPTION OF EXEMPLARY EMBODIMENTS

Specific embodiments of the invention will now be described with reference to the drawings. These embodiments are intended to illustrate, and not limit, the present invention.

The term "payment card" encompasses at least credit cards, debit cards, bank cards, smart cards, automatic teller machine (ATM) cards, and gift cards. In addition, other forms of payment may be interchangeable with the payment cards described herein, including RFID-enabled devices, wireless devices, and other electronic or magnetic devices that contain payment data. In addition, although the term payment card is used throughout, certain embodiments of the systems and methods may also be used to process identification cards such as drivers' licenses, security access cards, check cashing cards, and the like. For instance, instead of obtaining authorization of a payment card, various examples of the systems and methods described herein may be used to securely transmit and store identification card data.

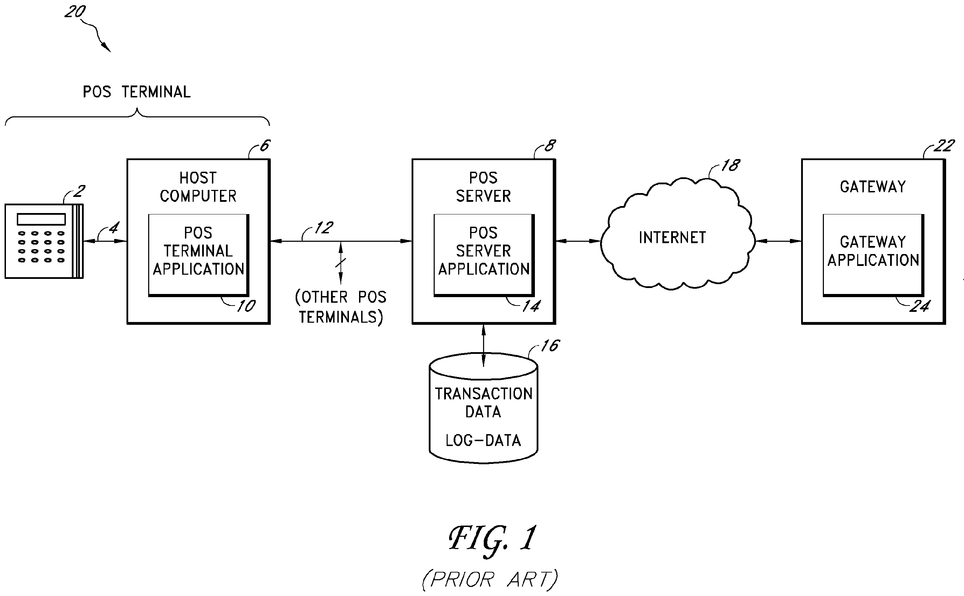

To further illustrate the problems of currently available payment systems, FIG. 1 depicts a prior art payment system at a point of sale. The point of sale can be a payment point at a merchant's place of business to which a customer presents a payment card for purchase or rental of goods and services. The point of sale can also be considered more generally as the merchant's place of business. The point of sale may include, for example, a cash register, a payment interface at a gas pump, a restaurant cashier, a front desk at a hotel, a rental car desk, or the like. In some locations, such as hotels, there may be multiple points of sale, such as at the front desk, at a restaurant, and at a gift shop. Regardless of the location of the POS 20, payment data is often not transmitted securely from one point to another and/or stored without adequate protection.

The payment system includes a POS terminal 20. The POS terminal 20 includes a card entry device 2 and a host computer 6. The card entry device 2 is a pin pad, card swipe reader, computer keyboard, or the like, and is used to capture or enter the payment data. The card entry device 2 transmits the payment data to the host computer 6 over link 4, which is a cable or the like. The host computer 6 may be a cash register, workstation, desktop computer, or the like.

In many cases, the link 4 is not secure because encryption is not used on the link 4 to protect the payment data. However, even when encryption is used, the card entry device 2 will still not be secure between the point of receiving the payment data and the point of encryption. A software or hardware keylogger, for example, residing on the card entry device 2 or even on the host computer 6 could intercept the payment data prior to the encryption of that data. Thus, both the card entry device 2 and the link 4 are vulnerable to payment data theft.

The host computer 6 executes a POS terminal application 10. The POS terminal application 10 is responsible for receiving the payment data from the card entry device 2. The POS terminal application 10 sends the payment data along with an authorization request, to determine whether the payment card has sufficient funds, to a POS server 8 over a network 12. Like the card entry device 2, the POS terminal application 10 on the host computer 6 might be compromised by malware, spyware, keyloggers, viruses, or the like. In addition, the network 12 may transfer unencrypted payment data to the POS server 8, creating vulnerabilities to packet sniffers, which intercept and log network traffic.

The POS server 8 is a computer typically located at the merchant's place of business or at a remote location owned and operated by the merchant. The POS server 8 executes a POS server application 14, which receives the payment data and authorization request from the POS terminal application 10. The POS server application 14 transmits the payment data for authorization to a gateway 22, which requests authorization from a card processor in communication with an authorizing entity.

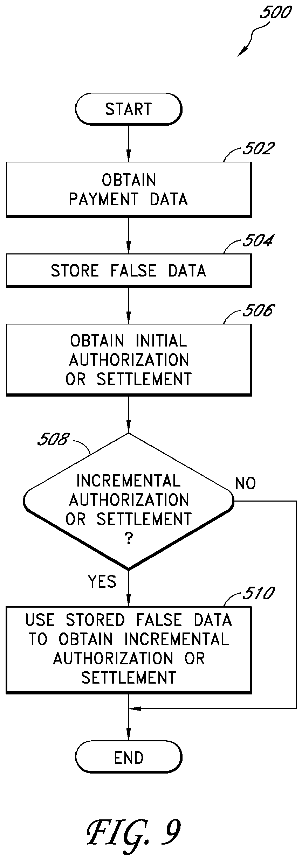

The POS server application 14 also stores transaction data and log data, both of which include the payment data, in a database 16. Transaction data is stored to enable the merchant to process incremental authorizations and settlements, such as a restaurant tip authorizations and rental car returns (see FIG. 9 for additional details). Log data is stored, among other reasons, for a technician to be able to troubleshoot the POS terminal 20. A drawback to storing payment data at the POS terminal 20 is that numerous payment card numbers are stored in unencrypted form in a single location, providing relatively easy access for a thief to obtain this unprotected data.

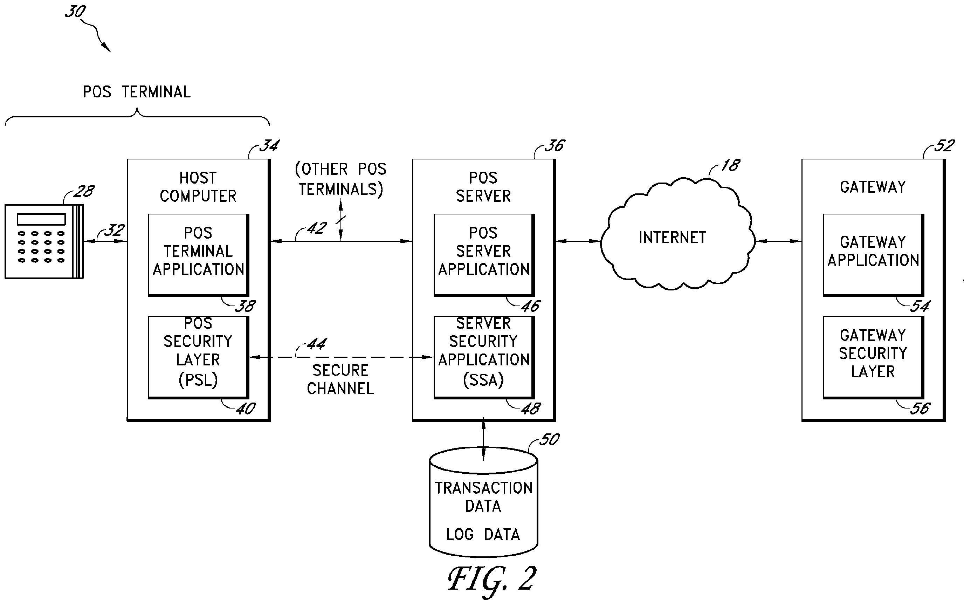

Turning to **FIG. 2**, an improved POS system is shown, which reduces or eliminates at least some of the problems found in the art. Various components of the POS system protect payment data at the card entry device 28 and during transit from a POS terminal 30 to a POS server 36. In addition, various components of the POS system reduce the amount of payment data stored at the merchant's place of business. Consequently, certain embodiments of the POS system overcome some or all of the problems described above.

The POS terminal 30 is a computer system for receiving payment data and requesting payment card authorizations. For example, the POS terminal 30 might be a computer terminal and card swipe device at a grocery checkout line. The POS terminal 30 of certain embodiments includes a combination of software and hardware components.

A business might have multiple POS terminals 30, each communicating with a single POS server 36. Some hotels, for instance, include POS terminals 30 at the front desk, in the hotel restaurant, and in the hotel gift shop, all of which are connected by a network to a common POS server 36. In another example, a retail or grocery store might include POS terminals 30 at each checkout line.

The POS terminal 30 and POS server 36 may be identical to the POS terminal and server of the prior art system of FIG. 1 but augmented with a POS security layer (PSL) 40 and server security application (SSA) 48. These two software components can be added to a preexisting payment system that is already deployed to effectively secure the system.

POS terminals 30 may perform specialized functions in different settings. For example, a restaurant POS terminal 30 might process an initial authorization and a later incremental authorization for processing a tip. A POS terminal 30 at a rental car establishment or hotel might preauthorize a car or room for a certain number of days, and then later request additional authorization when the car is returned late or when a guest checks out of the room late. These specialized functions are described further in connection with FIG. 9, below.

In certain embodiments, the POS terminal 30 includes a card entry device 28 and a host computer 34. The card entry device 28 is a pin pad, card swipe reader, computer keyboard, touch screen, or the like. Some implementations of the POS terminal 30 do not include the card entry device 28, but rather a software component that acts as a card entry device. For example, a payment screen at an Internet storefront might act as a card entry device.

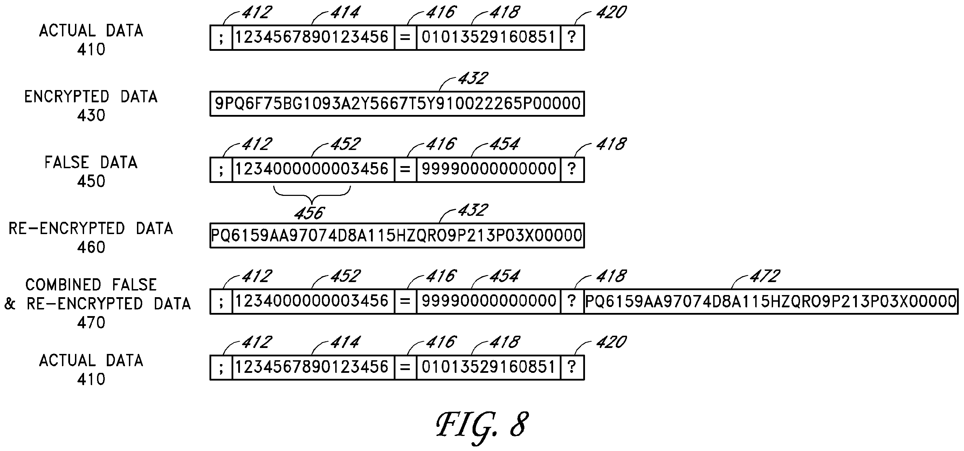

The card entry device 28 of various embodiments receives payment data from any payment medium. The payment medium may be a payment card, electronic chip, radio frequency identification (RFID) device, or the like. The payment data may be data encoded on a magnetic strip on the back of a card, data stored in an electronic chip, data stored in an RFID device, or any other form of stored data. As discussed below with respect to FIG. 8, the payment data may include track data stored on the back of a payment card.

The payment data may also include a personal account number (PAN), personal identification number (PIN), expiration date, cardholder name, and/or a card security code, e.g., a three-digit code commonly found on the back of payment cards. In addition, the payment data might include an electronic cardholder signature or biometric data, such as a digital fingerprint. The payment data may also include a dynamic security code, such as may be found in a radio frequency identification (RFID) device embedded in a payment card. Many other forms of payment data may also be provided.

The card entry device 28 passes the payment data to the host computer 34. In one example, the card entry device 28 is connected to the host computer 34 through a link 32. The link 32 is typically a cable, serial (e.g., RS232 or USB), parallel, Ethernet, or other hardware interface. Alternatively, the link 32 is not provided and the card entry device 28 is integral with the host computer 34. In another example, the link 32 is a software interface, such as a network socket, or some combination of hardware and software.

The host computer 34 may be implemented as a cash register or may be connected with a cash register. Typically, the host computer 34 is or comprises a general purpose computer (e.g., a PC). The host computer 34 receives payment data from the card entry device 28, processes the data, and transmits authorization requests to the POS server 36. When the POS server 36 transmits authorization responses to the host computer 34, the host computer 34 displays the response to the cardholder and processes a payment transaction.

The host computer 34 in one example
runs an operating system (not shown), such as Windows, Linux, Unix, or the like. The host computer 34 also includes the POS terminal application 38 and the POS security layer (PSL) 40. In certain examples, the POS terminal application 38 and the PSL 40 are software components, which may be implemented as scripts, executable programs, interpreted bytecode, or the like.

In one implementation, the PSL 40 is a low-level application relative to the POS terminal application 38. For example, the PSL 40 preferably has priority over the POS terminal application 38 to access operating system routines and data. In addition, the PSL 40 is preferably capable of intercepting data intended for transmission to the POS terminal application 38, such as payment data. The PSL 40 may run as an operating system process.

The PSL 40 in one implementation is a script running at a sufficiently low level on the host computer 34 to capture the payment data prior to the POS terminal application 38 receiving the payment data. In one example, the PSL 40 captures the payment data by monitoring and/or accessing an input buffer in the card entry device 28 or in the host computer 34. The PSL 40 may also be at a sufficiently low level to prevent malicious programs, such as keyloggers, packet sniffers, spyware, and viruses from obtaining the payment data. In addition, the PSL 40 encrypts the payment data and transmits the encrypted payment data to the POS server 36.

The POS terminal 30 communicates with the POS server 36 through a network 42. The network 42 may include cables, routers, switches, and other network hardware. In addition, the network 42 may be a wireless network, having wireless routers, access points, and the like. In one example, the network 42 is the same or similar to the network 12 used in the prior art system of FIG. 1. However, in addition to the network 12, the network 42 is made secure by the addition of a secure channel 44. In one implementation, the POS terminal application 38 and the POS server application 46 communicate over a non-secure channel in the network 42, and the PSL 40 and a server security application (SSA) 48 residing on the POS server 36 communicate over the secure channel 44. The channel 44 is secure in various implementations because encrypted data is transmitted between the PSL 40 and the SSA 48 over the channel 44.

The POS server 36 is a computer system that receives authorization requests from one or more POS terminals 30 and transmits the authorization requests to a remote server, e.g., a gateway 52 over the Internet 18, a wide area network (WAN), a local area network (LAN), or a leased line. The POS server 36 therefore acts as an interface between the POS terminal(s) 30 and the gateway 52. The POS server 36 may be located at a merchant's place of business. Alternatively, the POS server 36 is located at a remote data center, which may be owned or leased by the merchant.

In addition to performing authorizations, the POS server 36 of certain examples also performs settlements. At the close of business or the next morning prior to opening, the merchant, using the POS server 36, submits all of its authorized transactions to the remote server (e.g., gateway 52). This group of transactions is typically referred to as a batch settlement. By issuing a settlement, the POS server 36 enables the merchant to receive payment or a credit for payment on the day's authorized credit card transactions, including transactions with debit cards used as credit cards. In some examples, where debit cards are processed as debit, the merchant receives payment from the bank without using a batch settlement. When the payment cards are gift cards, settlement is also often not used.

As shown in the depicted embodiment of FIG. 2, the POS server 36 includes a POS server application 46 and the SSA 48. In certain examples, the POS server application 46 and the SSA 48 are software components, which may be implemented as scripts, executable programs, interpreted bytecode, or the like.

In one implementation, the POS server application 46 is a high-level application relative to the SSA 48. For example, the SSA 48 may have priority over the POS terminal application 46 to access operating system routines and data. In another example, the SSA 48 may be capable of intercepting data intended for transmission to the POS server application 46. In still other examples, the SSA 48 runs as an operating system process. Alternatively, the SSA 48 is not a lower-level application than the POS server application 46.

The SSA 48 of certain examples replaces a preexisting communications component or is a modification thereof. As a communications component, the SSA 48 in one implementation sends and receives authorization requests and settlements to a remote server, such as a gateway. Because the SSA 48 acts as the preexisting communications component, the POS server application 46 may communicate with the SSA 48 as if the SSA 48 were the preexisting communications component. The SSA 48 of certain examples therefore advantageously enables the POS server application 46 to send false payment data to the SSA 48 without any modification to the POS server application 46.

The SSA 48 and the PSL 40 may monitor each other to validate product versions and to ensure that the system has not been tampered with. This monitoring arrangement inhibits a thief or malicious code from altering the SSA 48 or PSL 40 to divert, for example, payment data to third parties.

In one embodiment, the PSL 40 encrypts the intercepted payment data and sends the encrypted payment data to the SSA 48 over the secure channel 44. The SSA 48 decrypts the encrypted payment data and creates false payment data by replacing all or a portion of the payment data with false data. The SSA 48 re-encrypts the payment data and stores the encrypted payment data on the POS server 36. Thereafter, the SSA 48 transmits the false payment data to the PSL 40 through the secure channel 44. The PSL 40 then provides the false payment data to the POS terminal application 38 in place of the actual payment data. The POS terminal application 38 processes the false payment data as if it were real payment data, providing the false payment data to the POS server application 46 over the non-secure channel 42 as part of an authorization request. Alternatively, the POS terminal application 38 provides the false payment data to the POS server application 46 over the secure channel 44. However, even when the POS terminal application 38 sends the false payment data over the non-secure channel 42, the system is still secure as no actual payment data is stored in a database 50.

In alternative embodiments, the PSL 40, rather than the SSA 48, creates the false payment data. The PSL 40 in such embodiments then sends the false payment data over the secure channel 44 to the SSA 48.

The POS server application 48 also processes the false payment data as if it were real payment data. Consequently, the POS server application 48 stores the false payment data in the database 50 rather than the actual payment data. Likewise, log data commonly maintained by the POS server application 46 also includes false payment data rather than actual payment data. Thus, in certain examples, no actual payment data is stored at the point of sale (or is stored only temporarily at certain points in the authorization process and deleted thereafter). Even if the false payment data includes a portion of the actual payment data (see FIG. 8), no complete actual payment data is stored at the point of sale.

The POS server application 46 transmits the false payment data to the SSA 48. The SSA 48 in an embodiment then combines the false payment data with the encrypted payment data and transmits the combined false and actual payment data over the Internet 18, leased line, or other network to the remote server (e.g., gateway 52) as part of an authorization request. The SSA 48 in another embodiment sends only the actual payment data or only the false payment data to the gateway 52. Moreover, the SSA 48 may send the actual payment data and the false payment data to the gateway 52 in separate transmissions. In one embodiment, the SSA 48 thereafter deletes all re-encrypted payment data. Alternatively, the SSA 48 waits for a response from the gateway 52 prior to deleting the re-encrypted payment data.

The gateway 52 in one example includes one or more computer systems acting as servers (or acting collectively as a server), remote from the POS server 36. In various embodiments, the gateway 52 is maintained by an application service provider (ASP), which provides application services and data storage for merchants. The gateway 52 may also be maintained by a card processor, card association, issuing bank, or other entity. For instance, the gateway 52 may be used as a card processor server, such that the POS server 36 communicates directly (or through one or more intermediaries) with the card processor. In some implementations, the gateway 52 communicates with the POS server 36 through a leased line or wide area network (WAN), and thereby acts as a demilitarized zone (DMZ) between the merchant network, including the POS terminals 30 and POS server 36, and the outside world. The gateway 52 in these implementations therefore adds an additional layer of security from outside attacks. The gateway 52 may also communicate with an authorizing entity using a leased line.

A gateway security layer (GSL) 56 residing on the gateway 54 separates the combined false payment data and re-encrypted payment data received from the POS server 36. The gateway security layer 56 decrypts the re-encrypted payment data and passes the payment data to a gateway application 54, which in an example (e.g., when the gateway 52 is not maintained by a card processor) transmits the payment data to a card processor for authorization. Alternatively, the gateway application 54 transmits the re-encrypted payment data, or in another example, encrypts the payment data with a different encryption scheme. Upon receiving a response to the authorization request, the GSL 56 transmits the authorization response along with the false payment data to the POS server 36. By providing the false payment data to the POS server 36, the GSL 56 enables the POS server 36 to identify the authorization response with the correct payment card (as represented by the false data), without providing the actual payment data.

Because the false payment data is identified with a specific payment card, the false payment data may be used as a token for an additional transaction with the same payment card, such as an incremental authorization or settlement, as described in further detail below with respect to FIG. 9. When an additional transaction using a payment card is requested by the POS server 36, the POS server 36 can send the token corresponding to that payment card to the gateway 52 to perform the additional transaction. The gateway 52 matches the token with the actual payment data stored at the gateway 52 in order to request authorization or settlement from an authorizing entity. Instead of returning the false payment data as a token, however, the GSL 56 of some examples can also return a different set of false data as a token. This false data in some instances may be a portion or derivative of the false payment data.

The gateway 52 also facilitates the performance of batch settlements in certain examples. In one instance, the POS terminal 30 sends end-of-day transaction information to the SSA 36, requesting settlement. The SSA 36 transmits the false data corresponding to the end-of-day transaction information to the gateway 52. The gateway 52 uses components of the false data to update final transaction amounts to be settled.

Thus, it can be seen that at various points of vulnerability in the POS system of FIG. 1, the payment data is secured. For instance, the PSL 40 prevents the POS data from being sent in clear form to the POS terminal application 38. In addition, the PSL 40 transmits an encrypted version of the data over a secure channel 44 to the SSA 48. The SSA 48 secures transaction data and log data stored in the database 50 by using false data and thus little or no cardholder data is stored on the database 50. Moreover, the GSL 46 secures transactions by storing actual payment data at a secure location and by transmitting false payment data or token data back to the POS server 36. Consequently, opportunities to improperly obtain payment data are reduced or eliminated entirely.

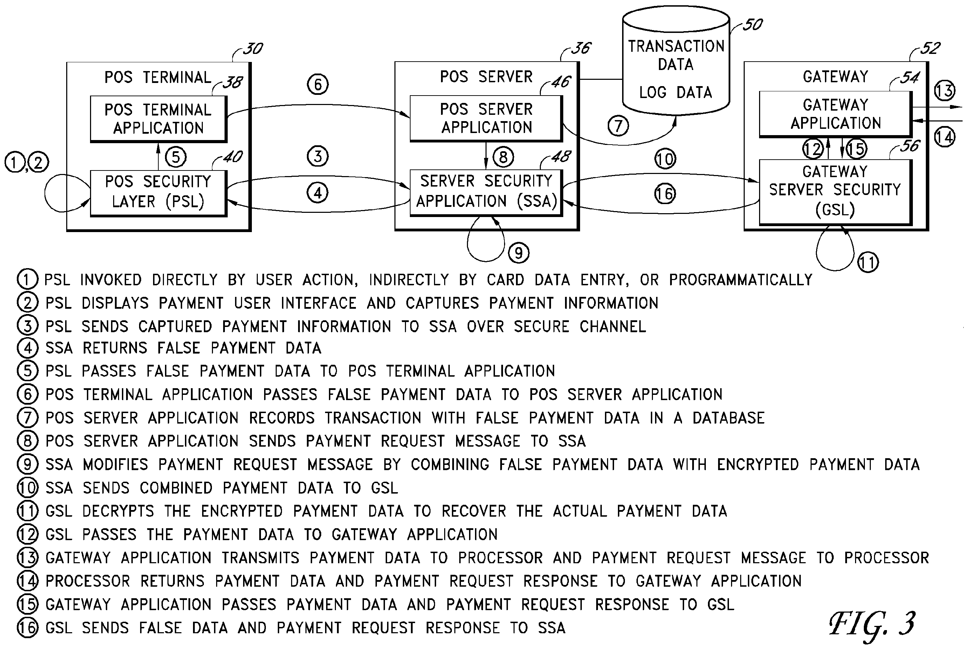

**FIG. 3** illustrates the above-described card authorization process according to one embodiment. At step 1, the PSL 40 is invoked directly by a user action, indirectly in response to payment data entry, or programmatically, e.g., by another program such as the POS terminal application 38. In one example where the PSL is invoked directly by user action, a hot key is used to invoke the PSL. The hot key may be located on the POS terminal 24 or on a card entry device such as the card entry device 28 of FIG. 2. The hot key may be a key on a keyboard, pin pad, computer screen, or touchscreen. In one example, the hotkey is a "debit" or "credit" key on a pin pad, pressed by the cardholder. In another embodiment, the hotkey is a payment card key pressed by an employee of the merchant.

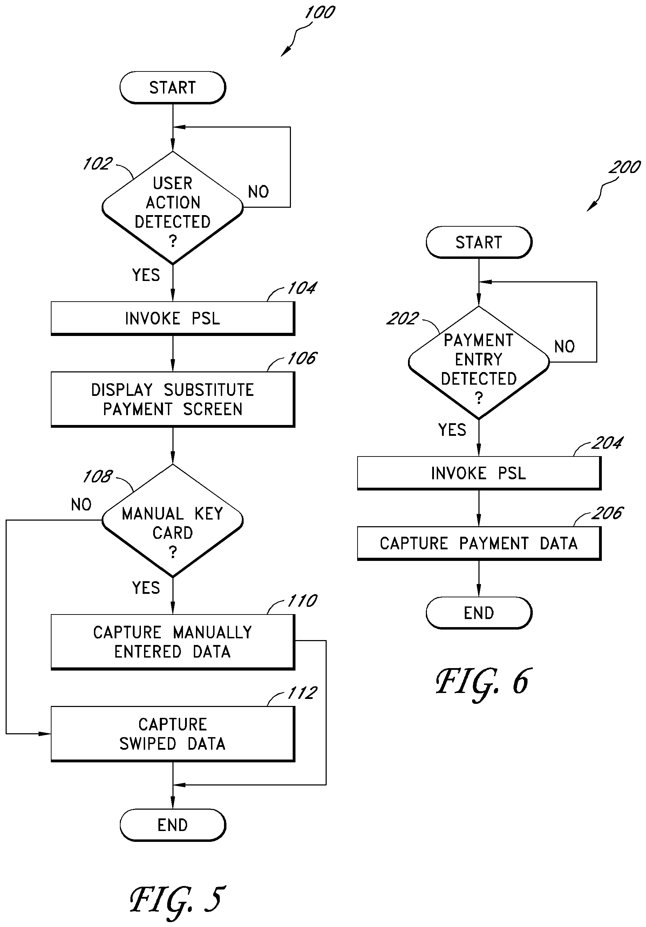

Additionally, the user action may include the use of a manual entry card, which is a card used by an employee of the merchant and is configured to enable the customer to manually enter payment data through a pin pad, keyboard, or the like. The use of a manual key card is described in greater detail below in connection with FIGS. 5-6.

In examples where the PSL 40 is invoked indirectly by a payment data entry event, the payment data entry event may include a card swipe or manual entry of payment data performed by a cardholder (e.g., a customer) or by an employee of the merchant. In an example where the PSL 40 is invoked programmatically, the POS terminal may make a function call by, for example, using a dynamic-linked library (DLL), which invokes the PSL 40.

In step 2, the PSL 40 displays a payment user interface (display screen) on the display of the card entry device 28. The payment user interface in one example is displayed in place of a preexisting payment user interface associated with the POS server application 46. The payment user interface in one embodiment is a substitute payment screen, which enables a user (e.g., cardholder or employee of the merchant) to provide payment data directly to the PSL 40. The substitute payment screen may also provide peace of mind to the user by displaying a message describing that the payment data is secure. In an alternative example, the substitute payment screen is hidden from the user and is therefore transparent to the user.

The payment user interface of some embodiments pops over or otherwise overlays or replaces the preexisting user interface. The payment user interface may have a similar look and feel to the preexisting user interface, or the payment user interface may have a different look and feel. In other examples, the payment user interface is the preexisting user interface rather than a substitute payment user interface.

The PSL 40 also captures payment data provided by the cardholder. The PSL 40 of certain examples intercepts the payment data and prevents other programs from accessing the data. By capturing the payment data prior to other programs capturing the data, the PSL 40 in various implementations acts as a keylogger.

In one embodiment, the PSL 40 is a hook-based keylogger, e.g., a keylogger that uses operating system routines (e.g., the SetWindowsHookEx API (application programming interface) in Windows implementations) to capture incoming data. Similarly, the PSL 40 may use other operating system routines (e.g., the GetKeyboardState API in Windows implementations) to obtain keystrokes prior to the keystrokes being received by any active window. Alternatively, the PSL 40 may be a kernel-based keylogger, receiving input/output (I/O) requests that are sent to the input device driver (e.g., the card entry device 28). In one such example, the PSL 40 employs a device-level driver that sits above the keyboard driver (e.g., between the input device driver and other operation system functions or applications), and hence is able to intercept I/O requests. Moreover, the PSL 40 may also be a handle injection keylogger by injecting characters into a window and thereby bypassing the input device. As a keylogger, the PSL 40 captures pin pad keystrokes, keyboard keystrokes, track data, signature data, biometric data, and the like. Capturing this data allows the PSL 40 to prevent malicious programs from accessing the data and also allows the PSL 40 to prevent the data from reaching the POS terminal application 38. Thus, the PSL 40 of certain examples increases the security of the POS terminal 30.

Turning to step 3, the PSL 40 transmits the captured payment data to the SSA 48 over a secure channel. In one embodiment, the channel is secure due to an encryption scheme performed by the PSL 40 on the payment data. The encryption scheme may include a mixed public/private key (asymmetric/symmetric key), a public key, a private key, or another encryption scheme. In one embodiment, an IPSEC or PKI protocol is used in the encryption scheme. One example implementation of the encryption scheme includes a mixed public/private key stored in real-time, in random-access memory (RAM). The encryption and decryption may be dynamic in nature, in that the encryption scheme may create a new public/private key pair each time the SSA 48 is started. In addition, the keys in the encryption scheme may be implemented using one or more encryption algorithms. For instance, a blowfish algorithm, twofish algorithm, a 3DES (Triple Data Encryption Standard) or AES (Advanced Encryption Standard) algorithm, or other algorithm may be used to encrypt the payment data at the PSL 40.

The SSA 48 in one embodiment decrypts the encrypted payment data and returns false payment data to the PSL 40 in step 4. Alternatively, the SSA 48 does not decrypt the payment data. The SSA 48 generates false payment data such that the POS terminal 30 and the POS server 36 will be able to process the false payment data as if it were real payment data. In one embodiment, the SSA 48 generates the false payment data using a random-number generator. In another embodiment, the SSA 48 generates the false payment data sequentially. For example, a personal account number (PAN) from a first payment card may be replaced with numbers from a sequence of false data, and a second PAN may be replaced with successive numbers in the sequence of false data. A more detailed example of false data is described below with respect toFIG. 8.

The SSA 48 reencrypts the payment data or provides additional encryption to already encrypted payment data. The SSA 48 stores the encrypted payment data on the POS server 36. In some implementations, the SSA 48 provides additional encryption even when the payment data is already encrypted because the SSA 48 can be used without the PSL 40 to process transactions from the POS server 36 and/or POS terminal 30. In such circumstances, it may be desirable to encrypt any data transmitted from the SSA 48 over a public network. Additionally, other non-public information that may already exist in the POS server 36 may be encrypted and sent to a data center using the SSA 48. Depending on the merchant, this information might include pre-registered information such as Social Security numbers, medical patient IDs, addresses, and the like.

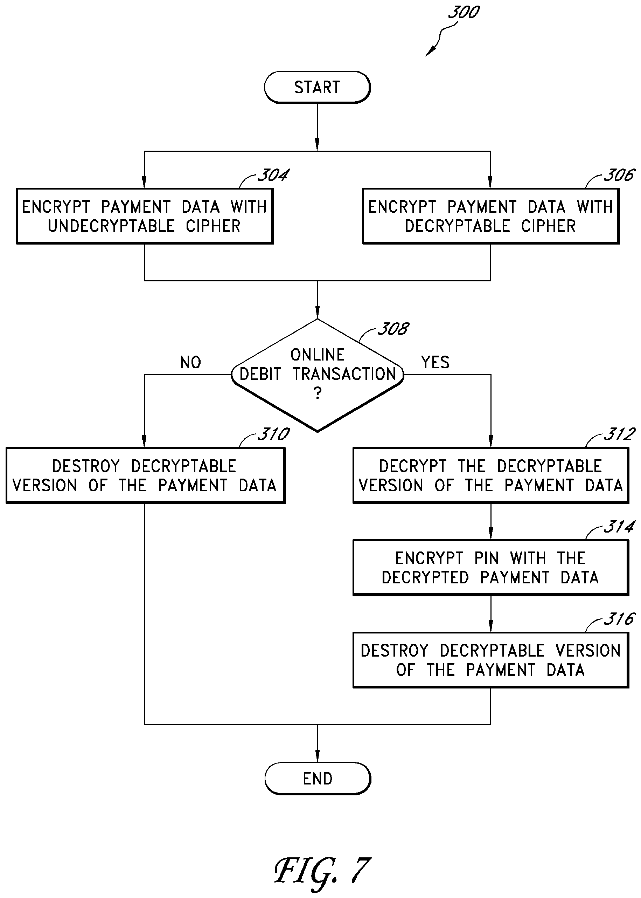

In one example, the SSA 48 provides two types of encrypted payment data, including an "undecryptable" version and a decryptable version. The undecryptable version is decryptable at the gateway 52 but not at the merchant location (e.g., at the POS terminal 30 or POS server 36), and the decryptable version is decryptable at the merchant location. As described more fully below in connection with FIG. 7, the undecryptable version may be used to process credit transactions and offline debit transactions, and the decryptable version may be used to process online debit transactions. However, in alternative examples, such as when online debit transactions are not used by the merchant, the SSA 48 provides only an undecryptable version of the payment data. Moreover, in still other embodiments, the PSL 40, rather than the SSA 48, provides the undecryptable and decryptable versions of encrypted payment data when the PSL 40 originally encrypts the payment data. In one such example, the SSA 48 provides additional encryption to the already-encrypted payment data. In addition, the SSA 48 may generate false payment data without knowing the contents of the actual payment data.

In step 5, the PSL 40 passes the false payment data to the POS terminal application 38. The POS terminal application 38 receives the false payment data as if it were the real payment data. Because the POS terminal application 38 has only false payment data, malicious software and hardware in communication with the POS terminal 30 cannot access the actual payment data.

In step 6, the POS terminal application 38 passes the false payment data to the POS server application 46 on the POS server 36 typically over a non-secure channel as part of an authorization request. Because false data is used, the payment data is made secure.

In step 7, the POS server application 46 records the transaction with the false payment data in the database 50. The transaction data may include the false payment data along with information regarding purchase price, items purchased, and the like. The transaction data is used in some applications for generating reports, generating batch settlements, and for processing incremental or authorizations (see FIG. 9 below). In addition, the POS server application 46 stores log data in the database 50. The log data may include a subset or all of the transaction data and may also include additional data. The log data may be used to provide access to a technician for troubleshooting the POS terminal 34 or the POS server 36. Because false transaction and log data are stored in the database 50, the payment data is secure.

In step 8, the POS server application 48 sends a payment or authorization request message to the SSA 46. Thereafter, in step 9 the SSA 46 modifies the payment request message by combining the false payment data with the re-encrypted payment data. The SSA 48 then sends the combined payment data to the gateway security layer (GSL) 56 in step 10.

At the gateway 52, the GSL 56 then decrypts the encrypted payment data in step 11 to recover the actual payment data. The GSL 56 in step 12 then passes the actual payment data to the gateway application 54. Alternatively, the GSL 56 reencrypts the data prior to sending the data to the gateway application 54. In another embodiment, the GSL 56 does not decrypt the encrypted data received from the POS server 36, but instead passes the encrypted data to the gateway application 54. In step 13, the gateway application 54 then transmits the payment data to a card processor, which is an intermediary in eventually obtaining an authorization response from a central location such as an issuing bank.

The processor returns the payment data and a payment request response to the gateway application 54 in step 14. The gateway application 54 passes the payment data and payment request response to the GSL 56 in step 15. Thereafter, the GSL 56 sends the false payment data, rather than the actual payment data, along with the payment request response to the SSA 48. By sending the false data, the GSL 56 enables the SSA 48 to identify the payment request response with the correct payment card without sending the actual payment data to the SSA 48.

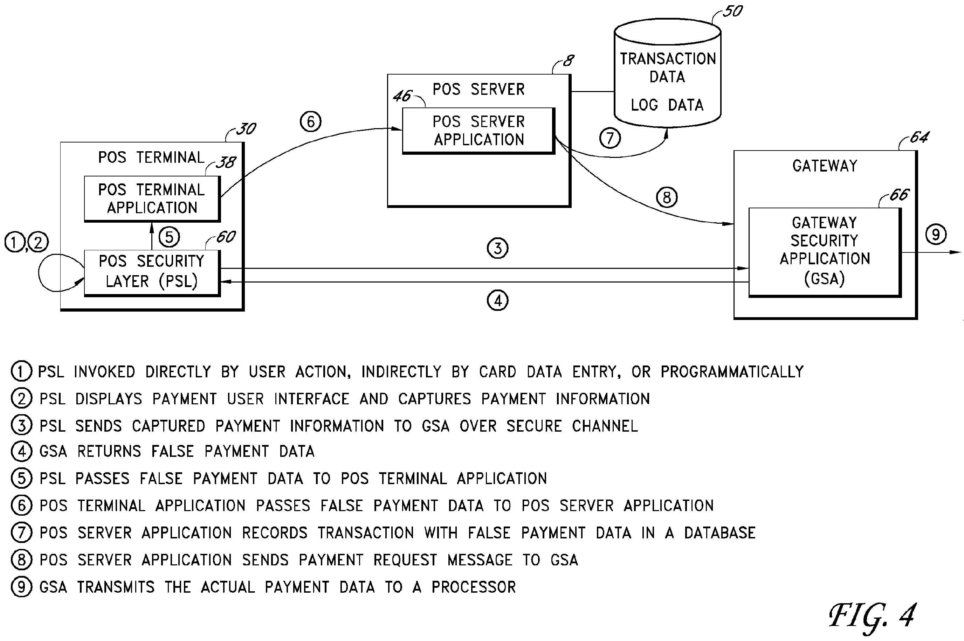

Turning to **FIG. 4**, an alternative process flow for processing payment card transactions is depicted. This alternative process flow might be used, for example, with legacy POS terminals 30 that have a direct communications interface (e.g., not via an SSA or the like) to a particular gateway or processing platform (e.g. a bank's proprietary front end). In the alternative process flow of FIG. 4, a POS terminal 30 is in communication with a gateway 64 and a POS server 8. In addition, a database 50 is in communication with, or maintained on, the POS server 8. At step 1, the PSL 60 is invoked directly by a user action, indirectly in response to payment data entry, or programmatically, e.g., in a similar manner as described with respect to FIG. 3 above.

Thereafter, in step 2 the PSL 60 displays a payment user interface and captures the payment information. In step 3, the PSL 60 sends the captured payment information to a gateway security application 62 over a secure channel, which may be the Internet, a leased line, or other network. In one example, the PSL encrypts the data prior to transmission, thereby securing the channel.

In step 4, the GSA 66 returns false payment data to the PSL 60. Consequently, no actual payment data is stored on the POS terminal 34 or the POS server 8. However, if an online debit transaction is used, the GSA 66 may also provide a decryptable version of the payment data to enable the POS terminal 30 to process the online debit transaction. In the alternative, the PSL 60 uses a decryptable version of the payment data to process the online debit transaction. The PSL 60 in step 5 passes the false payment data to the POS terminal application 38. The POS termination application 38 processes the false payment data as if it were actual payment data.

The POS terminal application 38 then in step 6 passes the false payment data to the POS server application 14. In step 7, the POS server application 14 records the transaction with the false payment data in the database 50. Because false payment data is stored in the database 50, the payment data is less vulnerable to theft.

Thereafter, the POS server application 14 in step 8 sends a payment request or authorization request message to the gateway 64 using the false payment data. The gateway security application 66 in step 9 transmits the actual payment data and a payment request message to a processor. Thus, except when the encrypted actual payment data is transmitted to the GSA 66, only false payment data is used in the authorization transaction. Finally, the gateway receives the payment data and the payment request response from the processor and forwards the response on to the POS server application 46.

Certain components described in the alternative process flow may be provided to a preexisting non-secure POS system to secure the POS system. In one example, the PSL 40 is provided to augment or retrofit a preexisting POS system. In addition, the GSA 66 may be provided to replace or to augment a preexisting gateway 64. However, in the depicted embodiment, no component is added to augment the preexisting POS server 8. Advantageously, fewer components are therefore used to secure the POS system in the alternative process flow of FIG. 4.

**FIGS. 5** and **6** illustrate various examples for invoking a PSL and capturing payment data. FIG. 5 depicts a method 100 for directly invoking a PSL and capturing payment data. FIG. 6 depicts a method 200 for indirectly invoking a PSL and capturing payment data. The methods 100, 200 may be performed by any of the POS terminals described above, and as part of the process of FIG. 3 or FIG. 4.

Referring to **FIG. 5**, at 102, the method 100 determines whether a user action has been detected. The user action may include, for example, a hotkey press or a manual key card swipe. If a user action has not been detected, the method 100 returns to 102. In one example, the method at 102 therefore listens for the pressing of a hotkey, which may be a key on a keyboard, pin pad, a button on a computer or touch screen, or the like. The pressing of a hotkey may be, for example, the pressing of a "payment type" key on a pin pad of the card entry device.

If a user action was detected, the method 100 invokes the PSL at 104. In one embodiment, the PSL is resident in memory prior to the key press, listening for a user action, payment data entry, or program call (described below with respect to FIG. 6). In one such embodiment, the PSL is invoked by activating functions in the PSL that enable the capture of payment data. In an alternative example, the PSL is invoked by being loaded into memory.

At 106, the method 100 displays a substitute payment screen. In one example, the payment screen is a substitute payment screen displayed in place of an original payment screen supplied by a POS manufacturer. The substitute payment screen may have a similar look and feel to the original payment screen; however, payment data entered into the substitute payment screen is captured by the PSL. The substitute payment screen may also look different from the original payment screen or include fewer or more features than the original payment screen. The substitute payment screen enables entry of payment data directly into the PSL.

The method 100 continues at 108 by determining whether the user action included the entry of a manual key card. The manual key card in one implementation is a card used by an employee of the merchant to prepare the POS terminal for receiving manual entry data. Manual entry data includes payment data typed into a keyboard, PIN pad, or the like, which may be entered if the card swipe reader is not working or is not available to the cardholder, such as in online or telephone catalog transactions. If the user action included use of a manual key card, the method 100 proceeds to capture the manually-entered data at 110. Otherwise, if another user action was used, the method 100 proceeds to capture swiped data of the payment card at 112.

In another example, manual entry of payment data may be done without using a manual entry card. For example, in one example, a cardholder invokes the PSL through a hotkey press and manually enters the payment data in the substitute payment screen.

Referring to **FIG. 6**, the method 200 determines whether payment data entry has been detected at 202. If payment data entry has not been detected, the method 200 returns to 202. In one example, the method at 202 therefore listens for payment data entry, which may include a card swipe, manual entry of payment data, or the like. The payment data entry may performed by a cardholder or employee of the merchant in various embodiments.

If payment data entry was detected, the method 200 invokes the PSL at 204, which captures the payment data at 206. In one example, the PSL is resident in memory prior to the payment data entry, listening for a user action (see FIG. 5) or payment data entry. In one such example, "invoking" the PSL means to activate the PSL to enable the PSL to capture the payment data. In an alternative example, the payment data entry invokes the PSL by causing the PSL to be loaded into memory.

In one example, a substitute payment screen is not used to capture the payment data because the payment data entry provided the payment data. In an alternative example, the substitute payment screen is also displayed in the method 200. In one such embodiment, the substitute payment screen enables the cardholder to enter PIN data, signature data, biometric data, or the like.

While not shown in FIG. 6, the PSL may also be invoked by a program call. In one such implementation, a software component on the POS terminal may make a function call by, for example, using a dynamic-linked library (DLL), which invokes the PSL.

**FIG. 7** is a flowchart diagram illustrating an embodiment of a method 300 for encrypting payment data. The method 300 may be performed by any of the POS systems described above and as part of the process of FIG. 3 or 4. In particular, the method 300 is performed by the SSA in one example. Advantageously, the method 300 enables online debit transactions to be secured. In some implementations, the term "online debit" denotes using a PIN to complete a debit transaction, and the term "offline debit" refers to using a signature to complete a debit transaction. Online debit is often referred to colloquially as a "debit" transaction, and "offline debit" is often referred to as a "credit" transaction.

At 304, the method 300 encrypts payment data with an "undecryptable" cipher. In one example, the data is undecryptable at the point of sale, e.g., at the POS terminal or POS server. However, the data may be decrypted at a gateway or other remote server.

At 306, the method 300 encrypts the payment data with a decryptable cipher. In one example, the data is decryptable at the point of sale, e.g., at the POS terminal or POS server. The method 300 in one implementation encrypts the data with the decryptable cipher at the same time or substantially the same time as the method 300 encrypts the data with the undecryptable cipher.

The method 300 next determines whether an online debit transaction is taking place at 308. If the transaction is not online debit (e.g., it is an off-line debit, credit, or gift card transaction), the method 300 destroys the decryptable version at 310. If, however, the transaction is online debit, the method 300 proceeds to decrypt the decryptable version of the payment data at 312. The decryptable version is destroyed by the SSA, although in alternative example, the PSL performs this function. Thereafter, the method 300 encrypts the PIN using the decrypted payment data to create an encrypted PIN block at 314. Once the encrypted PIN block is created, the method 300 destroys the decryptable version of the payment data at 316. As before, the decryptable version is destroyed by the SSA, but the PSL may also perform this function. In addition, in an alternative example, the method 300 may be applied to a credit card, gift card, or other card having a PIN, rather than a debit card.

One example implementation of the method 300 is as follows. An SSA encrypts payment data received from a PSL with an "undecryptable" cipher at 304 and a decryptable cipher at 306. The SSA determines whether the transaction is online debit at 308. If the transaction is not online debit, the SSA deletes the decryptable version of the data at 310. The SSA may delete the data upon detecting a non-online debit transaction, or the SSA may employ a time-out period (e.g., 30 seconds), after which the decryptable version will be automatically destroyed. In addition, the decryptable version may be stored in volatile memory (memory that erases on power-down), such as in random access memory (RAM). In one example, the time-out period is adjusted to balance transactional reliability with security. Alternatively, the SSA determines that the transaction is online debit and sends the decryptable version to the PSL, which decrypts the decryptable version of the payment data at 312. The PSL then provides the decrypted payment data to the pin pad, which at 314 encrypts the PIN using some or all of the payment data (e.g., the PAN or full track data). Once the PIN is encrypted or after a time-out period, the SSA destroys (permanently deletes the only copy of) the decryptable version of the payment data stored on the POS server at 316. In addition, if a copy of the decryptable version is stored on the POS terminal, the PSL also destroys this data.

Some businesses do not accept online debit transactions or any debit transactions. In these businesses, the method 300 may be configured to provide only an undecryptable version of the payment data. Thus, there may be no need to store a decryptable version.

Turning to **FIG. 8**, various formats of payment data are shown, some or all of which are generated during the process flow described above under either of FIGS. 3 or 4.

FIG. 8 illustrates actual data 410, originally presented by the cardholder. This actual data 410 is encrypted by a PSL and becomes encrypted data 430. Thereafter, an SSA decrypts the encrypted data 430 and replaces the actual data 410 with false data 450. In addition, the SSA re-encrypts the actual data 410 to generate re-encrypted data 460. The SSA combines the false data 450 and the re-encrypted data 460 to create combined data 470, which the SSA transmits to a gateway.

The various formats of payment data shown are depicted as track data. The actual data 410 is contained in a magnetic swipe on the payment card. This magnetic swipe includes one or more "tracks" of data. Many debit and credit cards have three tracks of data, which are typically referred to as "track 1," "track 2," and "track 3." Of these tracks, track 2 is often used by vendors to obtain payment data from the payment card. An example of track 2 data is shown in FIG. 8 as actual data 310.

The actual data 310 includes a start sentinel 412, represented by a ";'' character. The start sentinel 412 is used, for example, by parsing software to indicate the start of track 2 data. Following the start sentinel 412, a PAN 414 is shown. The depicted PAN 414 includes 16 digits. In alternative examples, more or fewer digits are included in the PAN 414.

Following the PAN 414, a field separator 416 is shown, denoted by the "=" character. The field separator 416 enables parsing software to distinguish between the PAN 414 and data following the PAN 416. After the field separator 416, ancillary data 418 is shown. The ancillary data 418 may include the expiration date of the card, the PIN of the card, and other discretionary data determined by the card issuer. In the depicted example, the first four digits of the ancillary data 418 are reserved for the card expiration date using the format YYMM ("0101"). An end sentinel 420 ("?") follows the ancillary data 418 to mark the end of the track.

In certain examples, track 1 data (not shown) is used instead of or in addition to track 2 data. One possible format of track 1 data might be the following: "% B PAN ^ Cardholder Name ^ Ancillary data ?". Like the track 2 data, the track 1 data includes start and end sentinels ("%" and "?"), one or more field separators ("^"), the PAN, and ancillary data. The track 1 data also includes a format code ("B"), which may vary, and the cardholder name. While the remainder of FIG. 8 describes a specific example using track 2 data, track 1 data may also be used interchangeably or with slight modifications. Likewise, though not shown, in some implementations track 3 data may also be used.

During the process flow described under FIGS. 3 and 4 above, the actual data 410 is encrypted by a PSL to generate encrypted data 430. The encrypted data 430 includes a block 432 of alphanumeric and/or symbolic representations of the actual data 410.

The encrypted data 430 is decrypted by the SSA, and the SSA replaces the actual data 410 with false data 450. In one example, the false data 450 looks substantially similar to the actual data 410. Because the false data 450 is similar to (in the same format as) the actual data 410, a POS terminal and POS server can process the false data 450 as if it were the actual data 410 without being aware of processing false data 450. Thus, in one example the false data 450 has a card-swipe compatible format.

In the depicted example, the false data 450 is a modified version of the actual data 410. The false data 450 includes the same start and end sentinels 412, 420 and the same field separator 416. However, a PAN 452 of the false data 450 differs from the PAN 414 of the actual data 414. In addition, ancillary data 454 of the false data 450 differs from the ancillary data 418 of the actual data 410.

The PAN 452 of the false data 450 in one implementation retains the first four digits ("1234") and the last four digits ("3456") of the PAN 414 of the actual data 410. Between the first four and last four digits, the digits of the actual data 410 are replaced with false digits 456, e.g., "00000000" in the depicted example. In addition, the ancillary data 454 of the false data 450 includes false data in the depicted example. In the depicted example, this false data completely replaces the ancillary data 418 of the actual data 410. Alternatively, the ancillary data 454 does not include false data.

The false data 450 for a particular payment card is unique and distinct from other false payment data 450 corresponding to other payment cards. In one example, this uniqueness is achieved by combining the false digits 456 between the first and last four digits of the PAN 452. In addition, the ancillary data 454 may be generated to provide unique false data 450.

The false digits 456 may be generated randomly. Alternatively, the false digits 456 are generated incrementally, where each successive payment card presented at the POS is provided a successive number in a sequence. For example, the false digits 456 may be incremented from 11111111 to 22222222 and so on down to 99999999. In addition, the false digits 456 may be generated from an algorithm which uses the date, time, and/or the origin of the transaction to derive a set of digits. In another implementation, the false digits 456 are generated according to another type of algorithm or a combination of the above-described algorithms. Likewise, the false ancillary data 454 may be generated randomly, sequentially, or algorithmically.

In another example, the false data 450 is generated such that the false data 450 fails the Luhn Modulus 10 algorithm ("the Luhn test"), as described in U.S. Patent No. 2,950,048, titled "Computer for Verifying Numbers". The Luhn test detects a valid card number by performing a checksum of the digits of the card number. The false data 450 may therefore be generated such that a checksum of the digits of the false data 450 indicates that the false data 450 is an invalid payment card number. Consequently, the false data 450 in this example cannot be used fraudulently as a valid card number.

The false data 450 may be generated to fail the Luhn test in a variety of ways. In one example, false data 450 is first generated that passes the Luhn test. Then, the false data 450 is modified so that it no longer passes the Luhn test, e.g., by changing a digit in the false data 450. For example, if one of the digits in the false data 450 is a 5, the algorithm could replace the 5 with any of the numbers 0-4 or 6-9, causing the false PAN to fail the Luhn test.

In addition or as an alternative to the Luhn test, invalid ranges of card numbers may be used to generate the false data 450. For example, different ranges of invalid card numbers may be designated by different card associations (e.g., Visa, American Express, or the like); a false data generation algorithm may then be used which ensures that all false card numbers generated for a particular card type (e.g., Visa) fall within the corresponding invalid range. In one example, at least a portion of the false data 450 is thus derived or selected from a range of invalid card numbers created by one or more card associations. For example, if a card association uses the range 4000000000000000 to 4999999999999999 for valid PAN numbers, at least a portion of the false data 450 could take on a number from 0000000000000000 to 3999999999999999 or from 5000000000000000 to 9999999999999999. Advantageously, false data 450 derived from these ranges in certain embodiments cannot be used for fraudulent authorizations. Moreover, in one implementation, the false data 450 may be derived from an invalid range of card numbers and also be generated to fail the Luhn test.

False data 450 generated to fail the Luhn test or generated from an invalid range of card numbers can be used beneficially as a token for additional transactions. In one example, the false data 450 is used directly as a token, or alternatively, a token is derived from the false data 450. In one example, the token includes three parts. These parts may include some portion of the first four digits of the PAN, followed by seven digits of false data, followed by the last four digits of the PAN. Because the token is an invalid card number, the token may be used in certain complex POS systems for additional or recurring transactions. In addition, this implementation of a token may allow greater flexibility for subsequent transaction processing, such that the token can be used to process subsequent transactions in a similar way to existing tokenization models.

Some POS terminals and/or servers may be changed to disable the use of the Luhn test in order to facilitate using false data 450 that fails the Luhn test. As some POS terminal and/or server manufacturers have the Luhn test enabled on a payment-type basis (e.g., credit card payment type, debit card payment type, or the like), this particular feature can be disabled for some or all payment-types accepted by a particular merchant. Thus, in various examples the false data 450 has a card-swipe compatible format that can be processed by the POS system, but the false data 450 is an invalid card number.

Because the first and last four digits of the PAN 414 are retained in the false PAN 452 in some variations, the combination of random, sequential, or algorithmically-defined digits and the first and last four digits of the PAN 452 will likely be unique from false data 450 generated for other payment cards. If a non-unique number is generated, in one embodiment the SSA re-generates the false data 450 until a unique number is found.

The false digits 456 may also be tied to a particular transaction. Thus, in one example, a single payment card used in multiple transactions may be assigned a unique set of false data 450 for each transaction. Alternatively, successive transactions use the same false data 450.

While one example of the false data 450 has been described, the false data 450 may be implemented in other ways. For instance, fewer or more than the first and last four digits of the actual PAN 414 may be retained, or additional portions of the ancillary data 418 may be retained. In addition, the ancillary data 418 may be falsified into false ancillary data 454 randomly, sequentially, or algorithmically. Moreover, in one example, one or more of the start and end sentinels 412, 420 or field separator 416 are replaced with false data. In addition, although numerals have been used to represent false data, in one embodiment, the false data 450 includes false alphanumeric or symbolic characters.

The false data 450 or portions thereof (e.g., the false digits 456) cannot be transformed into the actual data 410 in some embodiments because it is generated by a random process, sequence, or algorithm that is not based on the actual data 410. Thus, the false data 450 of such embodiments bears little or no relation to the actual data 410. The false data 450 of such embodiments is correlated with the actual data 410 only by the SSA combining the false 410 and re-encrypted data 460 together for transmission to the gateway. Thus, when the SSA deletes the re-encrypted data 460 after transmission, only the gateway knows the actual data 410 and to which actual data 410 the false data 450 corresponds. Thus, the false data 450 of certain embodiments helps secure the POS system.

FIG. 8 also depicts the re-encrypted data 460. This data 460 is generated by the SSA after the SSA decrypts the encrypted data 430 received from the PSL. While only one block of data is shown, the re-encrypted data 460 may actually be two data blocks-one undecryptable data block and one decryptable data block (see FIG. 7). The two data blocks may have different values.

The SSA combines the false data 450 and the re-encrypted data 460 into combined data 470. The SSA may use either the undecryptable or decryptable data block to create the combined data 470. Although the combined data is formed by concatenation in this example, any method of combining the false 450 and re-encrypted data 460 may be used provided that the method is known to the gateway. The SSA provides the combined data 470 to the gateway, which decrypts the re-encrypted data 460 stored in the combined data 470 to recover the actual data 410. Though not shown, the gateway may also re-encrypt the actual 410 data in a format that is decryptable by the authorizing entity (e.g., issuing bank). The gateway may instead not decrypt the re-encrypted data 460, but rather pass the re-encrypted data 460 directly to the authorizing entity.

Turning to **FIG. 9**, examples of a method 500 for obtaining incremental authorizations or settlements are shown. Payment data is often used to perform incremental authorizations or settlements. For example, in the restaurant environment, the payment card is first authorized for the amount of the bill. However, frequently the merchant adds incremental charges, such as tips and tabs to the bill after the cardholder has left. In order to complete the incremental transaction, the merchant retains the payment data.

Similarly, in lodging and rental industries, incremental authorizations are used. For example, hotels and car rental businesses use payment card authorizations to make reservations. Storing payment data enables hotels and car rental businesses to charge multiple items to a single invoice. Hotel customers often want and expect the ability to charge items to their room from the gift shop, restaurant, spa, and the like. In some cases, it may not always be possible to ask the cardholder to present a card to cover the cost of incidentals. The cardholder may have already checked out, for instance, prior to the discovery of a depleted mini bar, or they may have said they would return a car tank full of gas, but in fact did not.

In addition, mail order, telephone order, and online businesses often operate using a "book and ship" model. In this model, the order is placed, but the credit card is not charged until the order is actually shipped. In these cases, payment data is retained until the order is shipped and the card is charged for the amount of the order. Moreover, merchants who charge monthly memberships, such as spas, clubs, and gyms, also store the payment data in order to process these monthly charges.

Accordingly, FIG. 9 illustrates a method 500 for obtaining incremental authorizations or settlements. At 502, the method obtains payment data. The payment data may be obtained, for example, by the PSL. The method 500 then stores false data 504 in place of the payment data. In one example, the POS server application stores false data provided by the POS terminal application as if it were the real payment data. At 506, the method obtains an initial authorization or settlement 506 using the false data. This step may include the substeps of requesting an authorization or settlement using the POS terminal application and/or SSA, receiving the authorization or settlement with the gateway, and receiving the authorization or settlement response from the gateway at the SSA.

Thereafter, the method 500 determines at 508 whether an incremental authorization or a settlement is to be performed. In one example, this determination is made by the POS terminal application. If there is no such authorization or settlement, the method ends. Otherwise, the method 500 uses the stored false data at 510 to obtain an incremental authorization or delayed settlement by using, for instance, the SSA to request the authorization or settlement. Because the method 500 uses false data to perform the additional authorizations or settlements, sensitive payment data does not need to be stored at the merchant location to perform additional authorizations or settlements. As a result, the method 500 increases the security of payment card transactions.

In addition to the examples described above, some or all of the various systems and methods described herein may be employed with an online store over the Internet. For example, the point of sale may include a shopping cart program at the online store, and the online store may process all or a portion of a transaction using false data. Moreover, at least a portion of the systems and methods described herein may be implemented at a telephone call center. For instance, an operator may take payment data from a purchaser over the telephone and enter the payment data into a secure POS terminal, which performs all or a portion of the transaction using false data.

Moreover, although the POS terminal and the POS server have been described as separate devices, in certain examples the POS terminal and the POS server are a single physical device, or the functions of the POS terminal and server are performed by a single device. As a result, in one example some or all of the functions of the POS terminal and server are implemented, except that no network is used to communicate between the POS terminal and server. Additionally, some or all of the functions of the POS terminal may be performed by the POS server, and vice versa. Other implementations may also be employed, as will be understood by those of skill in the art.

Those of skill will further appreciate that the various illustrative logical blocks, modules, components, and process steps described in connection with the embodiments disclosed herein may be implemented as electronic hardware, computer software, or combinations of both. To clearly illustrate this interchangeability of hardware and software, various illustrative components, blocks, components, and steps have been described above generally in terms of their functionality. Whether such functionality is implemented as hardware or software depends upon the particular application and design constraints imposed on the overall system. Skilled artisans can implement the described functionality in varying ways for each particular application, but such implementation decisions should not be interpreted as causing a departure from the scope of the present invention.

## Claims

1. A method of securing payment card transactions at a point of sale (POS) in a payment card processing system, the system comprising a POS terminal (30) and a POS server (36) in communication with the POS terminal over a network, the POS terminal (30) comprising a host computer (34) and a card entry device (28), the host computer having a POS terminal application (38) and a POS security layer (40) installed thereon, the POS server having a POS server application (46) and a server security application (48) installed thereon, the POS server application (46) in communication with the POS terminal application (38) to process payment card transactions, the server security application (48) in communication with the POS security layer (40) over a secure channel (44) in the network, the method comprising:
the POS security layer (40):
intercepting actual payment data received from the card entry device when a user initiates a payment card transaction whereby the actual payment data is prevented from reaching the POS terminal application (38); and
sending the actual payment data to the server security application (48) over the secure channel (44);
the server security application (48):
receiving the actual payment data from the POS security layer (40) over the secure channel;
generating false payment data by replacing all or a portion of the actual payment data with false payment data; and
transmitting the false payment data over the secure channel (44) to the POS security layer (40);
the POS security layer (40):
receiving the false payment data from the server security application (48) over the secure channel (44); and
passing the false payment data to the POS terminal application for use in place of the actual payment data;
the POS terminal application (38):
receiving the false payment data from the POS security layer (40); and
transmitting the false payment data over the network to the POS server application (48);
the POS server application (46):
receiving the false payment data over the network from the POS terminal application (38);
processing the false payment data as if it is real payment data whereby the false payment data is stored in a database (50) rather than the actual payment data; and
transmitting the false payment data to the server security application (48) for payment processing;
the server security application (48):
receiving the false payment data from the POS server application (46); and
using the false payment data to process the payment card transaction by transmitting an authorization request to a payment gateway (52), the authorization request comprising the false payment data and the actual payment data.

2. The method of claim 1, further comprising the server security application (48) generating the false payment data using an algorithm that substantially guarantees that the false payment data does not represent valid card data.

3. A method of securing payment card transactions at a point of sale (POS) in a payment card processing system, the system comprising a POS terminal (30) and a POS server (36) in communication with the POS terminal over a network, the POS terminal (30) comprising a host computer (34) and a card entry device (28), the host computer having a POS terminal application (38) and a POS security layer (40) installed thereon, the POS server having a POS server application (46) and a server security application (48) installed thereon, the POS server application (46) in communication with the POS terminal application (38) to process payment card transactions, the server security application (48) in communication with the POS security layer (40) over a secure channel (44) in the network, the method comprising:
the POS security layer (40):
intercepting actual payment data received from the card entry device when a user initiates a payment card transaction whereby the actual payment data is prevented from reaching the POS terminal application (38);
generating false payment data by replacing all or a portion of the actual payment data with false payment data; and
transmitting the actual payment data and the false payment data over the secure channel (44) to the server security application (48);
the server security application (48):
receiving actual payment data and the false payment data from the POS security layer (40) over the secure channel (44);
the POS security layer (40):
passing the false payment data to the POS terminal application (38) for use in place of the actual payment data;
the POS terminal application (38):
receiving the false payment data from the POS security layer (40); and
transmitting the false payment data over the network to the POS server application (48);
the POS server application (46):
receiving the false payment data over the network from the POS terminal application (38);
processing the false payment data as if it is real payment data whereby the false payment data is stored in a database (50) rather than the actual payment data; and transmitting the false payment data to the server security application (48) for payment processing;
the server security application (48):
receiving the false payment data from the POS server application (46); and
using the false payment data to process the payment card transaction by transmitting an authorization request to a payment gateway (52), the authorization request comprising the false payment data and the actual payment data.

4. A payment card processing system for securing payment card transactions at a point of sale (POS), the system comprising a POS terminal (30) and a POS server (36) in communication with the POS terminal over a network, the POS terminal (30) comprising a host computer (34) and a card entry device (28), the host computer having a POS terminal application (38) and a POS security layer (40) installed thereon, the POS server having a POS server application (46) and a server security application (48) installed thereon, the POS server application (46) in communication with the POS terminal application (38) to process payment card transactions, the server security application (48) in communication with the POS security layer (40) over a secure channel (44) in the network, wherein the payment card processing system is configured to perform the method of any preceding claim.

5. A computer-readable medium having stored thereon a point-of-sale (POS) security layer (40) that is configured to be installed on a POS terminal (30) of a payment card processing system according to claim 4 when dependent on claim 1 or claim 2, wherein the POS terminal (30) runs a POS terminal application (38) and wherein the POS security layer (40) comprises executable instructions that cause the POS security layer (40) to:
intercept actual payment data received from the card entry device when a user initiates a payment card transaction whereby the actual payment data is prevented from reaching the POS terminal application (38);
send the actual payment data to the server security application (48) over the secure channel (44); and
receive the false payment data over the secure channel (44) from the server security application (48); and
pass the false payment data to the POS terminal application for use in place of the actual payment data.

6. A computer-readable medium having stored thereon a point-of-sale (POS) security layer (40) that is configured to be installed on a POS terminal (30) of a payment card processing system according to claim 4 when dependent on claim 3, wherein the POS terminal (30) runs a POS terminal application (38) and wherein the POS security layer (40) comprises executable instructions that cause the POS security layer (40) to:
intercept actual payment data received from the card entry device when a user initiates a payment card transaction whereby the actual payment data is prevented from reaching the POS terminal application (38);
generate false payment data by replacing all or a portion of the actual payment data with false payment data;
transmit the actual payment data and the false payment data over the secure channel (44) to the server security application (48);
pass the false payment data to the POS terminal application (38) for use in place of the actual payment data.

7. A computer-readable medium having stored thereon a server security application (48) that is configured to be installed on a point-of-sale (POS) server of a payment card processing system according to claim 4 when dependent on claim 1 or claim 2, wherein the POS server runs a POS server application (46) and wherein the server security application comprises executable instructions that cause the server security application (48) to:
receive the actual payment data from the POS security layer (40) over the secure channel (44);
generate false payment data by replacing all or a portion of the actual payment data with false payment data;
transmit the false payment data over the secure channel (44) to the POS security layer (40);
receive the false payment data from the POS server application (46); and
use the false payment data to process the payment card transaction by transmitting an authorization request to a payment gateway (52), the authorization request comprising the false payment data and the actual payment data.

8. A computer-readable medium having stored thereon a server security application (48) that is configured to be installed on a point-of-sale (POS) server of a payment card processing system according to claim 4 when dependent on claim 3, wherein the POS server runs a POS server application (46) and wherein the server security application comprises executable instructions that cause the server security application (48) to:
receive actual payment data and the false payment data from the POS security layer (40) over the secure channel (44);
receive the false payment data from the POS server application (46); and
use the false payment data to process the payment card transaction by transmitting an authorization request to a payment gateway (52), the authorization request comprising the false payment data and the actual payment data.

## Patentansprüche

1. Verfahren zur Sicherung von Bezahlungskartentransaktionen an einem Point of Sale (POS) in einem Bezahlungskartenverarbeitungssystem, wobei das System ein POS-Terminal (30) und einen POS-Server (36) in Kommunikation mit dem POS-Terminal über ein Netz umfasst, wobei das POS-Terminal (30) einen Host-Computer (34) und eine Karteneingabevorrichtung (28) umfasst, wobei der Host-Computer darauf installiert eine POS-Terminalanwendung (38) und eine POS-Sicherheitsschicht (40) aufweist, wobei der POS-Server darauf installiert eine POS-Serveranwendung (46) und eine Serversicherheitsanwendung (48) aufweist, wobei die POS-Serveranwendung (46) mit der POS-Terminalanwendung (38) in Kommunikation steht, um Bezahlungskartentransaktionen zu verarbeiten, wobei die Serversicherheitsanwendung (48) mit der POS-Sicherheitsschicht (40) über einen sicheren Kanal (44) in dem Netz in Kommunikation steht, wobei das Verfahren umfasst:
die POS-Sicherheitsschicht (40):
fängt tatsächliche Bezahlungsdaten ab, die von der Karteneingabevorrichtung empfangen werden, wenn ein Bediener eine Bezahlungskartentransaktion initiiert, wodurch verhindert wird, dass die tatsächlichen Bezahlungsdaten die POS-Terminalanwendung (38) erreichen; und
sendet die tatsächlichen Bezahlungsdaten an die Serversicherheitsanwendung (48) über den sicheren Kanal (44);
die Serversicherheitsanwendung (48):
empfängt die tatsächlichen Bezahlungsdaten von der POS-Sicherheitsschicht (40) über den sicheren Kanal;
generiert falsche Bezahlungsdaten durch Ersetzen aller oder eines Abschnitts der tatsächlichen Bezahlungsdaten durch falsche Bezahlungsdaten; und
überträgt die falschen Bezahlungsdaten über den sicheren Kanal (44) an die POS-Sicherheitsschicht (40) ;
die POS-Sicherheitsschicht (40):
empfängt die falschen Bezahlungsdaten von der Serversicherheitsanwendung (48) über den sicheren Kanal (44); und
leitet die falschen Bezahlungsdaten an die POS-Terminalanwendung zur Verwendung anstelle der tatsächlichen Bezahlungsdaten weiter;
die POS-Terminalanwendung (38):
empfängt die falschen Bezahlungsdaten von der POS-Sicherheitsschicht (40); und
überträgt die falschen Bezahlungsdaten über das Netz an die POS-Serveranwendung (48);
die POS-Serveranwendung (46):
empfängt die falschen Bezahlungsdaten über das Netz von der POS-Terminalanwendung (38);
verarbeitet die falschen Bezahlungsdaten als wären diese reale Bezahlungsdaten, wodurch die falschen Bezahlungsdaten in einer Datenbank (50) anstelle der tatsächlichen Bezahlungsdaten gespeichert werden; und
überträgt die falschen Bezahlungsdaten an die Serversicherheitsanwendung (48) zur Bezahlungsverarbeitung;
die Serversicherheitsanwendung (48):
empfängt die falschen Bezahlungsdaten von der POS-Serveranwendung (46); und
verwendet die falschen Bezahlungsdaten zur Verarbeitung der Bezahlungskartentransaktion durch Übertragen einer Autorisierungsanforderung an ein Bezahlungs-Gateway (52), wobei die Autorisierungsanforderung die falschen Bezahlungsdaten und die tatsächlichen Bezahlungsdaten umfasst.

2. Verfahren nach Anspruch 1,
ferner umfassend, dass die Serversicherheitsanwendung (48) die falschen Bezahlungsdaten unter Verwendung eines Algorithmus generiert, der im Wesentlichen garantiert, dass die falschen Bezahlungsdaten keine gültigen Kartendaten repräsentieren.

3. Verfahren zur Sicherung von Bezahlungskartentransaktionen an einem Point of Sale (POS) in einem Bezahlungskartenverarbeitungssystem, wobei das System ein POS-Terminal (30) und einen POS-Server (36) in Kommunikation mit dem POS-Terminal über ein Netz umfasst, wobei das POS-Terminal (30) einen Host-Computer (34) und einen Karteneingabevorrichtung (28) umfasst, wobei der Host-Computer darauf installiert eine POS-Terminalanwendung (38) und eine POS-Sicherheitsschicht (40) aufweist, wobei der POS-Server darauf installiert eine POS-Serveranwendung (46) und eine Serversicherheitsanwendung (48) aufweist, wobei die POS-Serveranwendung (46) mit der POS-Terminalanwendung (38) in Kommunikation steht, um Bezahlungskartentransaktionen zu verarbeiten, wobei die Serversicherheitsanwendung (48) mit der POS-Sicherheitsschicht (40) über einen sicheren Kanal (44) in dem Netz in Kommunikation steht, wobei das Verfahren umfasst:
die POS-Sicherheitsschicht (40):
fängt tatsächliche Bezahlungsdaten ab, die von der Karteneingabevorrichtung empfangen werden, wenn ein Bediener eine Bezahlungskartentransaktion initiiert, wodurch verhindert wird, dass die tatsächlichen Bezahlungsdaten die POS-Terminalanwendung (38) erreichen;
generiert falsche Bezahlungsdaten durch Ersetzen aller oder eines Abschnitts der tatsächlichen Bezahlungsdaten durch falsche Bezahlungsdaten; und
überträgt die tatsächlichen Bezahlungsdaten und die falschen Bezahlungsdaten über den sicheren Kanal (44) an die Serversicherheitsanwendung (48);
die Serversicherheitsanwendung (48):
empfängt die tatsächlichen Bezahlungsdaten und die falschen Bezahlungsdaten von der POS-Sicherheitsschicht (40) über den sicheren Kanal (44) ;
die POS-Sicherheitsschicht (40):
leitet die falschen Bezahlungsdaten an die POS-Terminalanwendung (38) zur Verwendung anstelle der tatsächlichen Bezahlungsdaten weiter;
die POS-Terminalanwendung (38):
empfängt die falschen Bezahlungsdaten von der POS-Sicherheitsschicht (40); und
überträgt die falschen Bezahlungsdaten über das Netz an die POS-Serveranwendung (48);
die POS-Serveranwendung (46):
empfängt die falschen Bezahlungsdaten über das Netz von der POS-Terminalanwendung (38);
verarbeitet die falschen Bezahlungsdaten als wären diese reale Bezahlungsdaten, wodurch die falschen Bezahlungsdaten in einer Datenbank (50) anstelle der tatsächlichen Bezahlungsdaten gespeichert werden; und
überträgt die falschen Bezahlungsdaten an die Serversicherheitsanwendung (48) zur Bezahlungsverarbeitung;
die Serversicherheitsanwendung (48):
empfängt die falschen Bezahlungsdaten von der POS-Serveranwendung (46); und
verwendet die falschen Bezahlungsdaten zur Verarbeitung der Bezahlungskartentransaktion durch Übertragen einer Autorisierungsanforderung an ein Bezahlungs-Gateway (52), wobei die Autorisierungsanforderung die falschen Bezahlungsdaten und die tatsächlichen Bezahlungsdaten umfasst.

4. Bezahlungskartenverarbeitungssystem zur Sicherung von Bezahlungskartentransaktionen an einem Point of Sale (POS), wobei das System ein POS-Terminal (30) und einen POS-Server (36) in Kommunikation mit dem POS-Terminal über ein Netz umfasst, wobei das POS-Terminal (30) einen Host-Computer (34) und einen Karteneingabevorrichtung (28) umfasst, wobei der Host-Computer darauf installiert eine POS-Terminalanwendung (38) und eine POS-Sicherheitsschicht (40) aufweist, wobei der POS-Server darauf installiert eine POS-Serveranwendung (46) und eine Serversicherheitsanwendung (48) aufweist, wobei die POS-Serveranwendung (46) mit der POS-Terminalanwendung (38) in Kommunikation steht, um Bezahlungskartentransaktionen zu verarbeiten, wobei die Serversicherheitsanwendung (48) mit der POS-Sicherheitsschicht (40) über einen sicheren Kanal (44) in dem Netz in Kommunikation steht, wobei das Bezahlungskartenverarbeitungssystem ausgelegt ist, das Verfahren nach einem der vorhergehenden Ansprüche vorzunehmen.

5. Computerlesbares Medium, welches darauf gespeichert eine Point of Sale- (POS-) Sicherheitsschicht (40) aufweist, die ausgelegt ist, auf einem POS-Terminal (30) eines Bezahlungskartenverarbeitungssystems nach Anspruch 4, wenn von Anspruch 1 oder Anspruch 2 abhängig, installiert zu werden, wobei das POS-Terminal (30) eine POS-Terminalanwendung (38) laufen lässt, und wobei die POS-Sicherheitsschicht (40) ausführbare Instruktionen umfasst, welche die POS-Sicherheitsschicht (40) veranlassen:
tatsächliche Bezahlungsdaten abzufangen, die von der Karteneingabevorrichtung empfangen werden, wenn ein Bediener eine Bezahlungskartentransaktion initiiert, wodurch verhindert wird, dass die tatsächlichen Bezahlungsdaten die POS-Terminalanwendung (38) erreichen;
die tatsächlichen Bezahlungsdaten an die Serversicherheitsanwendung (48) über den sicheren Kanal (44) zu senden; und
die falschen Bezahlungsdaten über den sicheren Kanal (44) von der Serversicherheitsanwendung (48) zu empfangen; und
die falschen Bezahlungsdaten an die POS-Terminalanwendung zur Verwendung anstelle der tatsächlichen Bezahlungsdaten weiterzuleiten.

6. Computerlesbares Medium, welches darauf gespeichert eine Point of Sale- (POS-) Sicherheitsschicht (40) aufweist, die ausgelegt ist, auf einem POS-Terminal (30) eines Bezahlungskartenverarbeitungssystems nach Anspruch 4, wenn von Anspruch 3 abhängig, installiert zu werden, wobei das POS-Terminal (30) eine POS-Terminalanwendung (38) laufen lässt, und wobei die POS-Sicherheitsschicht (40) ausführbare Instruktionen umfasst, welche die POS-Sicherheitsschicht (40) veranlassen:
tatsächliche Bezahlungsdaten abzufangen, die von der Karteneingabevorrichtung empfangen werden, wenn ein Bediener eine Bezahlungskartentransaktion initiiert, wodurch verhindert wird, dass die tatsächlichen Bezahlungsdaten die POS-Terminalanwendung (38) erreichen;
falsche Bezahlungsdaten durch Ersetzen aller oder eines Abschnitts der tatsächlichen Bezahlungsdaten durch falsche Bezahlungsdaten zu generieren;
die tatsächlichen Bezahlungsdaten und die falschen Bezahlungsdaten über den sicheren Kanal (44) an die Serversicherheitsanwendung (48) zu übertragen;
die falschen Bezahlungsdaten an die POS-Terminalanwendung (38) zur Verwendung anstelle der tatsächlichen Bezahlungsdaten weiterzuleiten.

7. Computerlesbares Medium, welches darauf gespeichert eine Serversicherheitsanwendung (48) aufweist, die ausgelegt ist, auf einem Point of Sale- (POS-) Server eines Bezahlungskartenverarbeitungssystems nach Anspruch 4, wenn von Anspruch 1 oder 2 abhängig, installiert zu werden, wobei der POS-Server eine POS-Serveranwendung (46) laufen lässt, und wobei die Serversicherheitsanwendung ausführbare Instruktionen umfasst, welche die Serversicherheitsanwendung (48) veranlassen:
die tatsächlichen Bezahlungsdaten von der POS-Sicherheitsschicht (40) über den sicheren Kanal (44) zu empfangen;
falsche Bezahlungsdaten durch Ersetzen aller oder eines Abschnitts der tatsächlichen Bezahlungsdaten durch falsche Bezahlungsdaten zu generieren;
die falschen Bezahlungsdaten über den sicheren Kanal (44) an die POS-Sicherheitsschicht (40) zu übertragen;
die falschen Bezahlungsdaten von der POS-Serveranwendung (46) zu empfangen;
die falschen Bezahlungsdaten zur Verarbeitung der Bezahlungskartentransaktion durch Übertragen einer Autorisierungsanforderung an ein Bezahlungs-Gateway (52) zu verwenden, wobei die Autorisierungsanforderung die falschen Bezahlungsdaten und die tatsächlichen Bezahlungsdaten umfasst.

8. Computerlesbares Medium, welches darauf gespeichert eine Serversicherheitsanwendung (48) aufweist, die ausgelegt ist, auf einem Point of Sale- (POS-) Server eines Bezahlungskartenverarbeitungssystems nach Anspruch 4, wenn von Anspruch 3 abhängig, installiert zu werden, wobei der POS-Server eine POS-Serveranwendung (46) laufen lässt, und wobei die Serversicherheitsanwendung ausführbare Instruktionen umfasst, welche die Serversicherheitsanwendung (48) veranlassen:
tatsächliche Bezahlungsdaten und die falschen Bezahlungsdaten von der POS-Sicherheitsschicht (40) über den sicheren Kanal (44) zu empfangen;
die falschen Bezahlungsdaten von der POS-Serveranwendung (46) zu empfangen; und
die falschen Bezahlungsdaten zur Verarbeitung der Bezahlungskartentransaktion durch Übertragen einer Autorisierungsanforderung an ein Bezahlungs-Gateway (52) zu verwenden, wobei die Autorisierungsanforderung die falschen Bezahlungsdaten und die tatsächlichen Bezahlungsdaten umfasst.

## Revendications

1. Procédé de sécurisation de transactions par carte de paiement sur un point de vente (POS) dans un système de traitement de carte de paiement, le système comprenant un terminal de point POS (30) et un serveur de point POS (36) en communication avec le terminal de point POS sur un réseau, le terminal de point POS (30) comprenant un ordinateur hôte (34) et un dispositif d'entrée de carte (28), l'ordinateur hôte ayant une application de terminal de point POS (38) et une couche de sécurité de point POS (40) installée sur ce dernier, le serveur de point POS ayant une application de serveur de point POS (46) et une application de sécurité de serveur (48) installée sur ce dernier, l'application de serveur de point POS (46) étant en communication avec l'application de terminal de point POS (38) pour traiter des transactions par carte de paiement, l'application de sécurité de serveur (48) étant en communication avec la couche de sécurité de point POS (40) sur un canal sécurisé (44) dans le réseau, le procédé comprenant :
la couche de sécurité de point POS (40) :
interceptant des données de paiement réelles reçues du dispositif d'entrée de carte lorsqu'un utilisateur initie une transaction par carte de paiement, grâce à quoi les données de paiement réelles ne peuvent pas atteindre l'application de terminal de point POS (38) ; et
envoyant les données de paiement réelles à l'application de sécurité de serveur (48) sur le canal sécurisé (44) ;
l'application de sécurité de serveur (48) :
recevant les données de paiement réelles en provenance de la couche de sécurité de point POS (40) sur le canal sécurisé ;
générant de fausses données de paiement en remplaçant la totalité ou une partie des données de paiement réelles par de fausses données de paiement ; et
transmettant les fausses données de paiement sur le canal sécurisé (44) à la couche de sécurité de point POS (40) ;
la couche de sécurité de point POS (40) :
recevant les fausses données de paiement en provenance de l'application de sécurité de serveur (48) sur le canal sécurisé (44) ; et
transférant les fausses données de paiement à l'application de terminal de point POS pour une utilisation à la place des données de paiement réelles ;
l'application de terminal de point POS (38) :
recevant les fausses données de paiement en provenance de la couche de sécurité de point POS (40) ; et
transmettant les fausses données de paiement sur le réseau à l'application de serveur de point POS (48) ;
l'application de serveur de point POS (46) :
recevant les fausses données de paiement sur le réseau en provenance de l'application de terminal de point POS (38) ;
traitant les fausses données de paiement comme s'il s'agissait de données de paiement réelles grâce à quoi les fausses données de paiement sont stockées dans une base de données (50) plutôt que les données de paiement réelles ; et transmettant les fausses données de paiement à l'application de sécurité de serveur (48) pour un traitement de paiement ;
l'application de sécurité de serveur (48) :
recevant les fausses données de paiement en provenance de l'application de serveur de point POS (46) ; et
utilisant les fausses données de paiement pour traiter la transaction par carte de paiement en transmettant une demande d'autorisation à une passerelle de paiement (52), la demande d'autorisation comprenant les fausses données de paiement et les données de paiement réelles.

2. Procédé selon la revendication 1, comprenant en outre l'application de sécurité de serveur (48) générant les fausses données de paiement à l'aide d'un algorithme qui garantit sensiblement que les fausses données de paiement ne représentent pas des données de carte valides.

3. Procédé de sécurisation de transactions par carte de paiement sur un point de vente (POS) dans un système de traitement de carte de paiement, le système comprenant un terminal de point POS (30) et un serveur de point POS (36) en communication avec le terminal de point POS sur un réseau, le terminal de point POS (30) comprenant un ordinateur hôte (34) et un dispositif d'entrée de carte (28), l'ordinateur hôte ayant une application de terminal de point POS (38) et une couche de sécurité de point POS (40) installée sur ce dernier, le serveur de point POS ayant une application de serveur de point POS (46) et une application de sécurité de serveur (48) installée sur ce dernier, l'application de serveur de point POS (46) étant en communication avec l'application de terminal de point POS (38) pour traiter des transactions par carte de paiement, l'application de sécurité de serveur (48) étant en communication avec la couche de sécurité de point POS (40) sur un canal sécurisé (44) dans le réseau, le procédé comprenant :
la couche de sécurité de point POS (40) :
interceptant des données de paiement réelles reçues du dispositif d'entrée de carte lorsqu'un utilisateur initie une transaction par carte de paiement, grâce à quoi les données de paiement réelles ne peuvent pas atteindre l'application de terminal de point POS (38) ;
générant de fausses données de paiement en remplaçant la totalité ou une partie des données de paiement réelles par de fausses données de paiement ; et
transmettant les données de paiement réelles et les fausses données de paiement sur le canal sécurisé (44) à l'application de sécurité de serveur (48) ;
l'application de sécurité de serveur (48) :
recevant les données de paiement réelles et les fausses données de paiement en provenance de la couche de sécurité de point POS (40) sur le canal sécurisé (44) ;
la couche de sécurité de point POS (40) :
transférant les fausses données de paiement à l'application de terminal de point POS (38) pour une utilisation à la place des données de paiement réelles ;
l'application de terminal de point POS (38) :
recevant les fausses données de paiement en provenance de la couche de sécurité de point POS (40) ; et
transmettant les fausses données de paiement sur le réseau à l'application de serveur de point POS (48) ;
l'application de serveur de point POS (46) :
recevant les fausses données de paiement sur le réseau en provenance de l'application de terminal de point POS (38) ;
traitant les fausses données de paiement comme s'il s'agissait de données de paiement réelles grâce à quoi les fausses données de paiement sont stockées dans une base de données (50) plutôt que les données de paiement réelles ; et
transmettant les fausses données de paiement à l'application de sécurité de serveur (48) pour un traitement de paiement ;
l'application de sécurité de serveur (48) :
recevant les fausses données de paiement en provenance de l'application de serveur de point POS (46) ; et
utilisant les fausses données de paiement pour traiter la transaction par carte de paiement en transmettant une demande d'autorisation à une passerelle de paiement (52), la demande d'autorisation comprenant les fausses données de paiement et les données de paiement réelles.

4. Système de traitement de carte de paiement pour sécuriser des transactions par carte de paiement sur un point de vente (POS), le système comprenant un terminal de point POS (30) et un serveur de point POS (36) en communication avec le terminal de point POS sur un réseau, le terminal de point POS (30) comprenant un ordinateur hôte (34) et un dispositif d'entrée de carte (28), l'ordinateur hôte ayant une application de terminal de point POS (38) et une couche de sécurité de point POS (40) installée sur ce dernier, le serveur de point POS ayant une application de serveur de point POS (46) et une application de sécurité de serveur (48) installée sur ce dernier, l'application de serveur de point POS (46) étant en communication avec l'application de terminal de point POS (38) pour traiter des transactions par carte de paiement, l'application de sécurité de serveur (48) étant en communication avec la couche de sécurité de point POS (40) sur un canal sécurisé (44) dans le réseau,
le système de traitement de carte de paiement étant configuré pour réaliser le procédé selon l'une quelconque des revendications précédentes.

5. Support lisible par ordinateur sur lequel est stockée une couche de sécurité de point de vente (POS) (40) qui est configurée pour être installée sur un terminal de point POS (30) d'un système de traitement de carte de paiement selon la revendication 4 lorsqu'elle dépend de la revendication 1 ou de la revendication 2, dans lequel le terminal de point POS (30) exécute une application de terminal de point POS (38) et dans lequel la couche de sécurité de point POS (40) comprend des instructions exécutables qui amènent la couche de sécurité de point POS (40) :
à intercepter des données de paiement réelles reçues du dispositif d'entrée de carte lorsqu'un utilisateur initie une transaction par carte de paiement, grâce à quoi les données de paiement réelles ne peuvent pas atteindre l'application de terminal de point POS (38) ;
à envoyer les données de paiement réelles à l'application de sécurité de serveur (48) sur le canal sécurisé (44) ; et
à recevoir les fausses données de paiement sur le canal sécurisé (44) en provenance de l'application de sécurité de serveur (48) ; et
à transférer les fausses données de paiement à l'application de terminal de point POS pour une utilisation à la place des données de paiement réelles.

6. Support lisible par ordinateur sur lequel est stockée une couche de sécurité de point de vente (POS) (40) qui est configurée pour être installée sur un terminal de point POS (30) d'un système de traitement de carte de paiement selon la revendication 4 lorsqu'elle dépend de la revendication 3, dans lequel le terminal de point POS (30) exécute une application de terminal de point POS (38) et dans lequel la couche de sécurité de point POS (40) comprend des instructions exécutables qui amènent la couche de sécurité de point POS (40) :
à intercepter des données de paiement réelles reçues du dispositif d'entrée de carte lorsqu'un utilisateur initie une transaction par carte de paiement, grâce à quoi les données de paiement réelles ne peuvent pas atteindre l'application de terminal de point POS (38) ;
à générer de fausses données de paiement en remplaçant la totalité ou une partie des données de paiement réelles par de fausses données de paiement ;
à transmettre les données de paiement réelles et les fausses données de paiement sur le canal sécurisé (44) à l'application de sécurité de serveur (48) ;
à transférer les fausses données de paiement à l'application de terminal de point POS (38) pour une utilisation à la place des données de paiement réelles.

7. Support lisible par ordinateur sur lequel est stockée une application de sécurité de serveur (48) qui est configurée pour être installée sur un serveur de point de vente (POS) d'un système de traitement de carte de paiement selon la revendication 4 lorsqu'elle dépend de la revendication 1 ou de la revendication 2, dans lequel le serveur de point POS exécute une application de serveur de point POS (46) et dans lequel l'application de sécurité de serveur comprend des instructions exécutables qui amènent l'application de sécurité de serveur (48) :
à recevoir les données de paiement réelles en provenance de la couche de sécurité de point POS (40) sur le canal sécurisé (44) ;
à générer de fausses données de paiement en remplaçant la totalité ou une partie des données de paiement réelles par de fausses données de paiement ;
à transmettre les fausses données de paiement sur le canal sécurisé (44) à la couche de sécurité de point POS (40) ;
à recevoir les fausses données de paiement en provenance de l'application de serveur de point POS (46) ; et
à utiliser les fausses données de paiement pour traiter la transaction par carte de paiement en transmettant une demande d'autorisation à une passerelle de paiement (52), la demande d'autorisation comprenant les fausses données de paiement et les données de paiement réelles.

8. Support lisible par ordinateur sur lequel est stockée une application de sécurité de serveur (48) qui est configurée pour être installée sur un serveur de point de vente (POS) d'un système de traitement de carte de paiement selon la revendication 4 lorsqu'elle dépend de la revendication 3, dans lequel le serveur de point POS exécute une application de serveur de point POS (46) et dans lequel l'application de sécurité de serveur comprend des instructions exécutables qui amènent l'application de sécurité de serveur (48) :
à recevoir des données de paiement réelles et les fausses données de paiement en provenance de la couche de sécurité de point POS (40) sur le canal sécurisé (44) ;
à recevoir les fausses données de paiement en provenance de l'application de serveur de point POS (46) ; et
à utiliser les fausses données de paiement pour traiter la transaction par carte de paiement en transmettant une demande d'autorisation à une passerelle de paiement (52), la demande d'autorisation comprenant les fausses données de paiement et les données de paiement réelles.
